(19)

Europäisches
Patentamt
European
Patent Office
Office européen
des brevets

(11) **EP 4 787 251 A1**

(12) **EUROPEAN PATENT APPLICATION**
published in accordance with Art. 153(4) EPC

(43) Date of publication:
**05.08.2026 Bulletin 2026/32**

(21) Application number: **24869724.5**

(22) Date of filing: **10.05.2024**

(51) International Patent Classification (IPC):
**G06N 20/00** (2019.01)    **G06F 18/20** (2023.01)

(52) Cooperative Patent Classification (CPC):
**G06F 18/20; G06N 20/00**

(86) International application number:
**PCT/CN2024/092297**

(87) International publication number:
**WO 2025/066156 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023  CN 202311274684**

(71) Applicant: **Shanghai Jiao Tong University**
**Shanghai 200240 (CN)**

(72) Inventor: **ZHANG, Quanshi**
**Shanghai 200240 (CN)**

(74) Representative: **Lavoix**
**Bayerstraße 83**
**80335 München (DE)**

(54) **METHOD AND SYSTEM FOR INTERPRETING COMMON INTERACTION UTILITY AMONGST MULTIPLE BLACKBOX ARTIFICIAL INTELLIGENCE MODELS**

(57)    The present application relates to the technical field of machine learning and discloses a method and system for interpreting common interaction effect among multiple black-box artificial intelligence models. The method and system can automatically analyze common interactions modeled among multiple different artificial intelligence models, and can also analyze common interactions modeled by the same model when the input is subjected to different perturbations. The implementation of the method and system comprises the following steps: providing an input sample; using multiple black-box models to perform prediction on the same data, or using a single black-box model to perform prediction on different data, to obtain multiple sets of prediction results; based on the multiple sets of prediction results, modeling the interactions among input units of the sample, computing the interaction strengths of combinations formed among input units, and expressing the output of each set of models as "AND interaction effect" and "OR interaction effect" among input unit combinations; and learning common "AND interaction effect" and "OR interaction effect" shared among different artificial intelligence models.

Fig.1

**Description**

TECHNICAL FIELD

The present invention relates to the technical field of machine learning, and specially to a method and system for interpreting common interaction effect modeled among multiple sets of black-box artificial intelligence models.

BACKGROUND ART

Currently, deep learning has been widely applied in various fields and has demonstrated strong performance, but it is difficult for users and researchers to analyze the black-box nature of artificial intelligence models. In existing technologies, interaction-based interpretation methods can analyze a single artificial intelligence model to obtain sparse and concise interpretations. However, for the same artificial intelligence model, given a specific input sample, current algorithms may extract multiple sets of interaction interpretations that are mutually equivalent yet different from each other, and cannot guarantee the extraction of common interaction interpretations from multiple sets of black-box models on the same input sample (i.e., cannot guarantee the extraction of similar interaction effect from different black-box models), whereas simultaneously obtaining common interpretation results among multiple sets of black-box models is precisely a necessary condition for the practical application of artificial intelligence interpretability methods.

Therefore, how to reliably interpret the common interaction relationships modeled by multiple sets of black-box models is an urgent problem to be solved in the field of interpretability.

SUMMARY OF THE INVENTION

The purpose of the present invention is to provide a method and system for interpreting common interaction effect modeled among multiple black-box artificial intelligence models, wherein the method and system can automatically analyze common interactions modeled among multiple different artificial intelligence models, and can also analyze common interactions modeled by the same model under different perturbations.

The present invention discloses a method for interpreting common interaction effect among multiple black-box artificial intelligence models, characterized in that the method comprises the following steps:

(1) Selecting black-box artificial intelligence models;

Selecting a plurality of black-box artificial intelligence models to be analyzed, wherein the number of the plurality of black-box artificial intelligence models to be analyzed is $\geq 2$.

(2) Selecting an input sample and performing identification;

Selecting an input sample for common interaction effect computation, and performing identification on the input sample, thereby decomposing the input sample into n input units, and combining the n input units to obtain $2^n$ combinations of the input units; the input sample is selected from the group consisting of: tabular data, images, text, speech, or any combination thereof;

(3) Computing "AND interaction effect" and "OR interaction effect" and performing combination;

Inputting the $2^n$ combinations of input units from the step (2) into the plurality of black-box artificial intelligence models respectively to obtain outputs of the plurality of black-box artificial intelligence models; and modeling the interaction effect among the input units modeled by the black-box artificial intelligence models based on the outputs and the $2^n$ combinations of the input units, thereby obtaining the "AND interaction effect" and "OR interaction effect" of each of the black-box artificial intelligence models to each of the combinations of the input units; and interpreting the output of each of the black-box artificial intelligence models on a certain input unit combination as a combination of its "AND interaction effect" and "OR interaction effect" on the said input unit combination; Sorting and weighting the "AND interaction effect" and "OR interaction effect"; For each of the combinations of the input units, one "AND interaction effect" and one "OR interaction effect" are measured from each black-box model, thereby obtaining a set of multiple "AND interaction effect" and a multiple "OR interaction effect". After taking the absolute values and sorting the set of multiple AND interaction effect and the set of multiple OR interaction effect, selecting the top K "AND interaction effect" with the largest absolute values and the top K "OR interaction effect" with the largest absolute values extracted from the multiple black-box models and penalizing them with a weight of 1, and penalizing the remaining interactions with a weight of r, wherein $0 < r < 1$;

(5) Optimizing the combination of the weighted "AND interaction effect" and "OR interaction effect" to obtain common interaction effect;

Jointly optimizing the combination of the "AND interaction effect" and "OR interaction effect" of the weighted plurality of black-box artificial intelligence models, thereby obtaining the common interaction effect among the plurality of artificial intelligence black-box models;
wherein the order of step (1) and step (2) may be freely exchanged or performed simultaneously.

In a preferred embodiment, the outputs of the plurality of black-box artificial intelligence models on the combinations of the input units are defined as follows: if the input units in the set N\S in the input sample x are masked while the input units in the set S are not masked, the obtained output is denoted as $v_m(x_S)$; if the input sample is input to the m-th black-box model without masking, the obtained output is denoted as $v_m(X_N)$; if all input units in the input sample are completely masked and then input to the m-th model, the obtained output is denoted as $V_m(x_\varnothing)$, and the "AND interaction effect" of an input unit combination S on the m-th black-box artificial intelligence model is denoted as $v_{m,and}(X_S)$, and the "OR interaction effect" of this input unit combination on the m-th black-box artificial intelligence model is denoted as $v_{m,or}(x_S)$; specifically, the "AND interaction effect" and "OR interaction effect" are used to interpret the output of the model; and accordingly, the output $v_m(x_S)$ of the black-box artificial intelligence model on the combination S of input units is interpreted as a combination of the "AND interaction effect" and the "OR interaction effect", i.e., $v_m(x_S) = v_{m,and}(x_S) + v_{m,or}(x_S)$. In a preferred embodiment, the "AND interaction effect" represents the additional effect produced by the combination on the output of a black-box model when none of the units in the combination of the input units is masked;

In a preferred embodiment, for the m-th artificial intelligence model, for a combination of input units $S \subseteq N$, $I^{AND}(S|v_{m,and}, x)$ is defined as the "AND interaction effect" corresponding to the combination S of input units for the m-th artificial intelligence model, which can be computed by the following formula:

$$I^{AND}\big(S|v_{m,and}, x\big) = \sum_{L \subseteq S}(-1)^{|S|-|L|} v_{m,and}(x_L)$$

In a preferred embodiment, the "OR interaction effect" represents the additional effect produced by the combination on the output of a set of black-box models when at least one of the units in the combination of the input units is not masked;

In a preferred embodiment, for the m-th artificial intelligence model, for a combination of input units $S \subseteq N$, $I^{OR}(S|v_{m,or}, x)$ is defined as the "OR interaction effect" corresponding to the combination S of input units for the m-th artificial intelligence model, which can be computed by the following formula:

$$I^{OR}\big(S|v_{m,or}, x\big) = \begin{cases} v_{m,or}(x_\varnothing), & S = \varnothing \\ -\sum_{L \subseteq S}(-1)^{|S|-|L|} v_{m,or}(x_{N \setminus L}), & S \neq \varnothing \end{cases}$$

In a preferred embodiment, the step (3) further comprises the following step: computing the output value of each black-box model when any of the input units of the input sample are arbitrarily masked.

In a preferred embodiment, the value range of K in the step (4) is $0 < K \leq 5$.

In a preferred embodiment, for the m-th black-box artificial intelligence model, its output $v_m(x_T)$ on any combination S of input units can be interpreted as the following formula:

$$\forall T \subseteq N, v_m(x_T) = v_m(x_\varnothing) + \sum_{S \subseteq T, S \neq \varnothing} \hat{I}^{AND}\big(S|v_{m,and}, x\big) + \sum_{S \cap T \neq \varnothing} \hat{I}^{OR}\big(S|v_{m,or}, x\big)$$

In a preferred embodiment, the step (5) further comprises the following step: deriving a loss function, wherein the loss function is a characteristic function of the combination of the "AND interaction effect" and the "OR interaction effect", used to represent the degree of optimization of the combination of the "AND interaction effect" and "OR interaction effect"; the loss function is as follows:

$$\min_{p^1, q^1, \ldots, p^M, q^M} Loss = Loss_{salient} + r \cdot Loss_{non-salient} \text{ s.t.} \qquad \forall S \subseteq N, |q_S^m| < \tau_q^m$$

wherein:

$$Loss_{salient} = \sum_{S \subseteq N} \left[ \sum_{m \in \Omega_{AND}(S)} \left| \hat{I}^{AND}\left(S|v_{m,and}, x\right) \right| + \sum_{m \in \Omega_{OR}(S)} \left| \hat{I}^{OR}\left(S|v_{m,or}, x\right) \right| \right], \quad Loss_{non-salient} = \sum_{S \subseteq N} \left[ \sum_{m \notin \Omega_{AND}(S)} \left| \hat{I}^{AND}\left(S|v_{m,and}, x\right) \right| + \sum_{m \notin \Omega_{OR}(S)} \left| \hat{I}^{OR}\left(S|v_{m,or}, x\right) \right| \right];$$

For each set $S_i \subseteq N$, M black-box artificial intelligence models will extract a total of M "AND interaction effect" and M "OR interaction effect", and $\Omega_{AND}(S_i)$ and $\Omega_{OR}(S_i)$ respectively represent the top K AND interactions and OR interactions with the largest absolute values among the interaction effect extracted by the M black-box artificial intelligence models. $\tau_q^m$ is a preset bias threshold for the m-th artificial intelligence model, which can be expressed as

$$\tau_q^m = 1 \times |v_m(x_N) - v_m(x_\varnothing)|;$$

A second aspect of the present invention discloses a method for interpreting common interaction effect of a single black-box artificial intelligence model in input samples under different perturbations, characterized in that the method comprises the following steps:

(1) Selecting a black-box artificial intelligence model;
Selecting a single black-box artificial intelligence model to be analyzed;
(2) Selecting an input sample and generating perturbations;
Selecting an input sample for common interaction effect computation, and applying multiple random perturbations with the same dimension as the input sample to the input sample, to obtain multiple perturbed samples;
(3) Computing "AND interaction effect" and "OR interaction effect" and performing combination;
Inputting the multiple perturbed samples from the step (2) into the black-box artificial intelligence model to obtain multiple outputs, and modeling the "AND interaction effect" and "OR interaction effect" of the black-box artificial intelligence model on the multiple perturbed samples based on the outputs and performing combination, and then interpreting the output of each of the perturbed samples on the black-box artificial intelligence model as a combination of its "AND interaction effect" and "OR interaction effect" in the black-box artificial intelligence model;
(4) Sorting and weighting the "AND interaction effect" and "OR interaction effect";
For each of the combinations of the input units, one "AND interaction effect" and one "OR interaction effect" are measured from each perturbed sample, thereby obtaining a set of multiple "AND interaction effect" and a multiple "OR interaction effect". After taking the absolute values and sorting the set of multiple AND interaction effect and the set of multiple OR interaction effect, selecting the top K "AND interaction effect" with the largest absolute values and the top K "OR interaction effect" with the largest absolute values extracted from the multiple perturbed samples and penalizing them with a weight of 1, and penalizing the remaining interactions with a weight of r, wherein $0 < r < 1$;
(5) Optimizing the combination of the weighted "AND interaction effect" and "OR interaction effect" to obtain common interaction effect;
Jointly optimizing the combination of the "AND interaction effect" and "OR interaction effect" of the weighted multiple perturbed samples, thereby obtaining the common interaction effect among the multiple perturbed samples;

wherein step (1) and step (2) may be freely exchanged or performed simultaneously.

In a preferred embodiment, the perturbations in the step (2) are added through the following method: specifically, the data sample x to be analyzed contains n input units, wherein the number of input units n is a positive integer. There are different ways to define input units. Optionally, an input unit in an input image can be a region in the input image, or a pixel. In natural language processing, an input unit can be an embedding encoding of a letter, an embedding encoding of a morpheme, or an embedding encoding of a word in the input sentence. It is assumed that the random perturbation also contains n input units and follows a distribution P. Optionally, the distribution P can represent n high-dimensional Gaussian distributions, can represent n independent uniform distributions, or can be adversarial perturbations targeting the performance of the artificial intelligence model. Under the distribution P, M random perturbations are sampled respectively, denoted as $\{\varepsilon_1, \varepsilon_2, \dots, \varepsilon_M\}$.

In a preferred embodiment, the "AND interaction effect" represents the additional effect produced by the combination on the output of a black-box model when none of the units in the combination of the input units is masked;

In a preferred embodiment, for $S \subseteq N$, $I^{AND}(S|v_{and}, x + \varepsilon_m)$ is defined as the "AND interaction effect" corresponding to the combination S among input units when the m-th perturbation $\varepsilon_m$ is added to the input sample x, such that $I^{AND}(S|v_{and}, x + \varepsilon_m)$ is triggered only when all input variables in S are not masked, and is accumulated into the output corresponding to the AND interaction of the black-box model for the m-th perturbation. Specifically, $I^{AND}(S|v_{and}, X + \varepsilon_m)$ can be computed by the following formula:

$$I^{AND}(S|v_{and}, x + \epsilon_m) = \sum_{L \subseteq S} (-1)^{|S|-|L|} v_{and}[(x + \epsilon_m)_L]$$

Here, the subscript of $(x + \epsilon_m)_L$ denotes the masked sample produced by masking the input units in the set N\L in the m-th perturbed sample $x + \epsilon_m$, while maintaining the values of the input units in the set L.

In a preferred embodiment, the "OR interaction effect" represents the additional effect produced by the combination on the output of a set of black-box models when at least one of the units in the combination of the input units is not masked;

In a preferred embodiment, for $S \subseteq N$, $I^{OR}(S|v_{or}, x + \epsilon_m)$ is defined as the "OR interaction effect" corresponding to the combination S among input units when the m-th perturbation $\epsilon_m$ is added to the input sample x, such that $I^{OR}(S|v_{or}, x + \epsilon_m)$ is triggered only when at least one of all input variables in S is not masked, and is accumulated into the output corresponding to the OR interaction of the black-box model for the m-th perturbation. Specifically, $I^{OR}(S|v_{or}, x + \epsilon_m)$ can be computed by the following formula:

$$I^{OR}(S|v_{or}, x + \epsilon_m) = \begin{cases} v_{or}[(x + \epsilon_m)_\emptyset], & S = \emptyset \\ -\sum_{L \subseteq S} (-1)^{|S|-|L|} v_{or}[(x + \epsilon_m)_{N \setminus L}], & S \neq \emptyset \end{cases}$$

wherein the subscript of $(x + \epsilon_m)_{N \setminus L}$ denotes the masked sample produced by masking the input units in the set L on the m-th perturbed sample $x + \epsilon_m$ while maintaining the values of the input units in the set N\L.

In a preferred embodiment, the step (3) further comprises the following step: computing the output value of the black-box model when any of the input units of the input sample are arbitrarily masked.

In a preferred embodiment, the value range of K in the step (4) is $0 < K \leq 5$.

In a preferred embodiment, the output $v[(x + \epsilon_m)_T]$ of an artificial intelligence model under any input unit combination on the m-th perturbed sample can be interpreted as the following formula:

$$\forall T \subseteq N, v[(x + \epsilon_m)_T] = v_{and}[(x + \epsilon_m)_T] + v_{or}[(x + \epsilon_m)_T]$$
$$= v[(x + \epsilon_m)_\emptyset] + \sum_{S \subseteq T, S \neq \emptyset} \hat{I}^{AND}(S|v_{and}, x + \epsilon_m)$$
$$+ \sum_{S \cap T \neq \emptyset} \hat{I}^{OR}(S|v_{or}, x + \epsilon_m)$$

In a preferred embodiment, the step (5) further comprises the following step: deriving a loss function, wherein the loss function is a characteristic function of the combination of the "AND interaction effect" and the "OR interaction effect", used to represent the degree of optimization of the combination of the "AND interaction effect" and "OR interaction effect"; the loss function is as follows:
the loss function is as follows:

$$\min_{\hat{I}^{AND}, \hat{I}^{OR}} Loss = Loss_{salient} + r \cdot Loss_{non-salient}$$

wherein

$$Loss_{salient} = \sum_{S \subseteq N} \left[ \sum_{m \in \Omega_{AND}(S)} \left| \hat{I}^{AND}(S|v_{and}, x + \epsilon_m) \right| + \sum_{m \in \Omega_{OR}(S)} \left| \hat{I}^{OR}(S|v_{or}, x + \epsilon_m) \right| \right], \; Loss_{non-salient} = \sum_{S \subseteq N} \left[ \sum_{m \notin \Omega_{AND}(S)} \left| \hat{I}^{AND}(S|v_{and}, x + \epsilon_m) \right| + \sum_{m \notin \Omega_{OR}(S)} \left| \hat{I}^{OR}(S|v_{or}, x + \epsilon_m) \right| \right].$$

A third aspect of the present invention discloses a system for computing common interactions of multiple sets of black-box artificial intelligence models, the system comprising:

(1) An input module, wherein the input module is configured to accept multiple pre-trained black-box artificial intelligence models and a set of data to be analyzed, or a single black-box artificial intelligence model and a set of data to be analyzed with perturbations;

(2) A computation module, wherein the computation module is configured to, based on the models and data in the input module, compute the "AND interaction effect" and "OR interaction effect" among input units of the data to be analyzed as modeled by the multiple sets of models, and jointly optimize the combination of the "AND interaction effect" and "OR interaction effect" of the multiple sets of models to learn common "AND interaction effect" and "OR interaction effect".

(3) An output module, configured to output the common interactions obtained by the computation module.

The specification of the present application describes a large number of technical features distributed across various technical solutions. If all possible combinations of technical features (i.e., technical solutions) of the present application were to be listed, the specification would become overly lengthy. To avoid this problem, the individual technical features disclosed in the above summary of the invention, the individual technical features disclosed in the following embodiments and examples, and the individual technical features disclosed in the accompanying drawings can all be freely combined with one another to constitute various new technical solutions (all of which shall be deemed as having been described in this specification), unless such a combination of technical features is technically infeasible. For example, if features A+B+C are disclosed in one example and features A+B+D+E are disclosed in another example, and features C and D are equivalent technical means serving the same function such that only one may be selected for use technically and both cannot be adopted simultaneously, and feature E is technically combinable with feature C, then the solution of A+B+C+D should not be deemed as having been described due to technical infeasibility, whereas the solution of A+B+C+E should be deemed as having been described.

## BRIEF DESCRIPTION OF THE DRAWINGS

The following provides a brief introduction to the drawings needed for use in the description of the embodiments or the prior art. Obviously, the drawings in the following description are merely some embodiments of the present invention. For those of ordinary skill in the art, other drawings can be obtained based on these drawings without creative effort.

FIG. 1 is a flowchart of a method for interpreting interaction effect modeled by multiple black-box artificial intelligence models according to a first embodiment of the present invention;

FIG. 2a is a schematic diagram of samples to be analyzed and input variables described in the present invention;

FIG. 2b is a descending distribution of absolute values of "AND interaction effect" and "OR interaction effect" obtained according to the present invention;

FIG. 3 is the degree of sharing of extracted interactions obtained according to the present invention;

FIG. 4a is a schematic diagram of samples to be analyzed and input variables described in the present invention;

FIG. 4b is a descending distribution of absolute values of "AND interaction effect" and "OR interaction effect" obtained according to the present invention;

FIG. 5 is the degree of sharing of extracted interactions obtained according to the present invention;

## DETAILED DESCRIPTION OF EMBODIMENTS

Through meticulous and in-depth research, the inventors have for the first time developed a method and system for interpreting common interaction effect modeled among multiple black-box artificial intelligence models.

**Terminology**

It should be noted that in the patent documents of the present invention, relational terms such as first and second are merely used to distinguish one entity or operation from another entity or operation, and do not necessarily require or imply any actual relationship or order between these entities or operations. Moreover, the terms "include", "comprise", or any other variants thereof are intended to encompass non-exclusive inclusion, such that a process, method, article, or device that includes a series of elements includes not only those elements but also other elements not explicitly listed, or further includes elements inherent to such process, method, article, or device. Without further limitations, an element defined by the phrase "comprising a/an" does not exclude the existence of additional identical elements in the process, method, article, or device that includes the element. In the patent documents of the present invention, if it is mentioned that a certain action is performed based on a certain element, it means performing the action at least based on that element, which includes two situations: performing the action solely based on that element, and performing the action based on that element and other elements. Expressions such as "multiple", "a plurality of", and "various" include two, twice, or two types, as well as more than two, more than twice, or more than two types.

**Black-box artificial intelligence model**

The artificial intelligence model, black-box model, and black-box artificial intelligence model referred to in the present invention have the same meaning, all referring to a black-box artificial intelligence model.

**Multiple sets of black-box artificial intelligence models**

The multiple sets of models described in the present invention can be multiple different artificial intelligence models $v_1(x), v_2(x), ... v_M(x)$, or can be the output values $v(x + \varepsilon_1), v(x + \varepsilon_2), ... v(x + \varepsilon_M)$ obtained by using the same artificial intelligence model to perform prediction when different perturbations are added to the same input sample, where $\varepsilon_1, \varepsilon_2, ..., \varepsilon_M$ are the perturbation amounts added to the input sample.

**Method for interpreting common interaction effect modeled among multiple sets of black-box artificial intelligence models**

The method for interpreting common utilities modeled among multiple sets of black-box artificial intelligence models used in the present invention specifically comprises the following steps:

(1) Selecting models

Selecting one or more black-box artificial intelligence models to be analyzed, wherein each black-box artificial intelligence model is a model pre-trained on a certain dataset.

(2) Obtaining data to be evaluated

Collecting and preprocessing data to be evaluated, wherein the data can be in the form of tabular data, images, text, speech, etc., but must be compatible with the models in step (1). The data to be evaluated contains a certain number of input units.
If it is necessary to analyze common interactions modeled by the same model under different perturbations, then for each piece of data to be evaluated, multiple different random perturbations need to be sampled, and the random perturbations are applied to the data to be evaluated to obtain multiple perturbed samples.

(3) Modeling "AND interaction effect" and "OR interaction effect" among input units in the input sample

The same data to be evaluated from step (2) is input into multiple models from step (1), or multiple perturbed samples of the same data to be evaluated from step (2) are input into a single model from step (1), and outputs of multiple sets of models are obtained. Based on the output of each set of black-box models, the interaction effect among input units modeled by these black-box models are modeled. For each set composed of different input units, the interaction effect modeled by each black-box model among the input units in that set is computed. Theoretically, the output of each set of black-box models can be expressed as the sum of "AND interaction effect" and "OR interaction effect" among different input unit combinations.

(4) Optimizing the combination of "AND interaction effect" and "OR interaction effect"

Based on the "AND interaction effect" and "OR interaction effect" of the multiple sets of models described in step (3), by jointly optimizing the combination of the "AND interaction effect" and "OR interaction effect" of the multiple sets of models, common interaction effect among the multiple models or among the multiple perturbed samples are obtained, representing the common interaction effect in the models or data to be evaluated.
In a preferred embodiment, the step (1) further comprises the following step:
Training one or more black-box artificial intelligence models based on a certain dataset, as models to be analyzed.

Optionally, a model can be a deep neural network.

In a preferred embodiment, the step (2) further comprises the following sub-steps:

(2a) Collecting data to be analyzed. Optionally, if the model in step (1) can be used for sentiment classification, the data to be analyzed can be a text.

(2b) Preprocessing the data to be analyzed. Optionally, the data to be analyzed can be subjected to processing such as tokenization, encoding into embedding vectors, etc., to adapt it to the input of the aforementioned model.

(2c) If it is necessary to analyze common interactions modeled by the same model under different perturbations, then different perturbations are generated for the same sample. Multiple different random perturbations having the same dimension as the data to be analyzed in step (2) are sampled, and the above multiple random perturbations are respectively applied to the data to be analyzed to obtain multiple perturbed samples.

Specifically, the data sample $x$ to be analyzed contains $n$ input units, wherein the number of input units $n$ is a positive integer. There are different ways to define input units. Optionally, an input unit in an input image can be a region in the input image, or a pixel. In natural language processing, an input unit can be an embedding encoding of a letter, an embedding encoding of a morpheme, or an embedding encoding of a word in the input sentence. It is assumed that the random perturbation also contains $n$ input units and follows a distribution $P$. Optionally, the distribution $P$ can represent $n$ high-dimensional Gaussian distributions, or can represent $n$ independent uniform distributions. Under the distribution $P$, $M$ random perturbations are sampled respectively, denoted as $\{\varepsilon_1, \varepsilon_2, \ldots, \varepsilon_M\}$.

In the above sub-step (2c), the $M$ random perturbations are respectively applied to the input sample $x$ to be analyzed, getting $x^{(1)} = x + \varepsilon_1$, $x^{(2)} = x + \varepsilon_2 \ldots$, $x^{(M)} = x + \varepsilon_M$, a total of $M$ perturbed samples.

In a preferred embodiment, the step (3) further comprises the following sub-steps:

(3a) Computing the output values of multiple sets of black-box models when any combination of input units of the above data sample to be analyzed is masked. Optionally, the output values of multiple different artificial intelligence models on the same input sample can be computed, or the output values of the same model on different perturbed samples can be computed.

(3b) Computing the "AND interaction effect" in the data to be analyzed as modeled by each set of black-box models;

(3c) Computing the "OR interaction effect" in the data to be analyzed as modeled by each set of black-box models.

In the above sub-step (3a), the $M$ sets of black-box artificial intelligence models can be the output values $v_1(x)$, $v_2(x)$, ... $v_M(x)$ of using $M$ different artificial intelligence models to perform prediction on the same input sample $x$, or can be the output values $v(x + \varepsilon_1)$, $v(x + \varepsilon_2)$, ... $v(x + \varepsilon_M)$ of adding different perturbations to the same input sample x and using the same artificial intelligence model to perform prediction. Optionally, the $M$ different artificial intelligence models $v_1(x)$, $v_2(x)$, ... $v_M(x)$ can be represented as M real scalar outputs, and the model outputs $v(x + \varepsilon_1)$, $v(x + \varepsilon_2)$, ... $v(x + \varepsilon_M)$ obtained by adding $M$ different perturbations to the same input sample $x$ can also be represented as M real scalar outputs. The input sample $x$ to be analyzed contains $n$ input units, denoted as the set $N = \{1, 2, \ldots, n\}$. Wherein, the number of input units is generally a positive integer greater than or equal to 5. Optionally, each dimension of the input data can be regarded as one input unit, or the input data can be divided into multiple regions, with each region regarded as one input unit. Optionally, an input unit in an input image can be a region in the input image, or a pixel; in natural language processing, an input unit can be an embedding encoding of a letter, an embedding encoding of a morpheme, or an embedding encoding of a word in the input sentence.

Any subset $S \subseteq N$ of input units in the input sample is called a combination among input units, and $v_m(x_S)$ ($1 \leq m \leq M$) represents the output of the $m$-th black-box model on a masked sample $x_S$. It is defined that if the input units in $N \setminus S$ of the input sample are masked while the input units in the set $S$ are not masked, the obtained output is denoted as $v_m(x_S)$. $x_S$ denotes the masked sample produced by retaining the input units in the combination $S$ of input units unchanged in the input sample $x$ and masking the input units in $N \setminus S$. In particular, if the input sample is input to the $m$-th black-box model without masking, the obtained output is denoted as $v_m(x_N)$; if all input units in the input sample are completely masked and then input to the $m$-th model, the obtained output is denoted as $v_m(x_\emptyset)$.

For the input sample $x$ to be analyzed (optionally, an unperturbed input sample or a perturbed input sample), when computing the output $v_m(x_S)$ of the $m$-th black-box model on a certain input unit combination $S$, the input values of the sample to be analyzed need to be maintained on the input units contained in S, while all input units in the complement $N \setminus S$ of $S$ are replaced with baseline values. In particular, assuming the baseline value is b, the individual input units of the masked sample $x_S$ to be analyzed are defined by the following formula:

$$(x_S)_i = \begin{cases} x_i & \text{if the } i\text{-th input unit of the input is contained in the input unit combination } S \\ b_i & \text{if the } i\text{-th input unit of the input is not contained in the input unit combination } S \end{cases}$$

Thus, $v_m(x_S)$ can be computed as the output value obtained by inputting the sample $x_S$ to be analyzed into the $m$-th model. Optionally, the baseline value can be set to the mean of the sample set, a random value, a zero value, etc., or can be obtained through learning. Wherein, the baseline value of the $m$-th model is denoted as $b^m$. Further, the output $v_m(x_S)$ of the $m$-th model computed based on the baseline value $b^m$ can be specifically denoted as $v_m(x_S|b^m)$. It should be understood that, where no ambiguity arises, $v_m(x_S|b^m)$ can be abbreviated as $v_m(x_S)$.

The "AND interaction effect" and "OR interaction effect" are used to interpret the output of the model. Given the output $v_m$ of the $m$-th black-box model and an input sample $x$, when computing the output $v_m(x_S)$ on a certain input unit combination S, the model output $v_m(x_S)$ is decomposed into two terms, i.e., $v_m(x_S) = v_{m,and}(x_S) + v_{m,or}(x_S)$. In this way, $v_{m,and}(x_S)$ can be interpreted using AND interactions, and $v_{m,or}(x_S)$ can be interpreted using OR interactions.

Optionally, it can be set that

$$v_{m,and}(x_S) = \frac{1}{2}[v_m(x_S) + q_S^m] + p_S^m, \quad v_{m,or}(x_S) = \frac{1}{2}[v_m(x_S) + q_S^m] - p_S^m$$

. Wherein, $p_S^m \in \mathbb{R}$ represents a partition of the model output $v_m(x_S)$ on the input unit combination $S$ into "AND interaction effect" and "OR interaction effect"; $q_S^m \in \mathbb{R}$ represents a small bias produced by interpreting the model output $v_m(x_S)$ on the input unit combination $S$ as "AND interaction effect" and "OR interaction effect".

In the above sub-step (3b), the "AND interaction effect" is computed to evaluate the contribution of the AND interaction among any input unit combinations of the sample to be analyzed to the output $v_{m,and}(x)$ corresponding to the AND interaction of each model. The "AND interaction effect" represents the additional effect produced on the output corresponding to the AND interaction of a black-box model when the units in the combination are simultaneously triggered (i.e., not masked). It should be understood that in a black-box model, input units often do not contribute to the model's output individually, but rather interact with each other to influence the model's output.

Therefore, in the task of extracting common interactions among different models (i.e., in the process of interpreting common interaction effect among multiple black-box artificial intelligence models), given $M$ artificial intelligence models and an input sample $x$, for $S \subseteq N$, $I^{AND}(S|v_{m,and}, x)$ is defined as the "AND interaction effect" corresponding to the combination $S$ among input units of the $m$-th artificial intelligence model, such that $I^{AND}(S|v_{m,and}, x)$ is triggered only when all input variables in $S$ are not masked, and is accumulated into the output $v_{m,and}(x)$ corresponding to the AND interaction of the $m$-th black-box model. Specifically, $I^{AND}(S|V_{m,and}, x)$ can be computed by the following formula:

$$I^{AND}\left(S|v_{m,and}, x\right) = \sum_{L \subseteq S}(-1)^{|S|-|L|}v_{m,and}(x_L)$$

While in the task of extracting common interactions of input samples under different perturbations (i.e., when interpreting common interaction effect of a single black-box artificial intelligence model in input samples under different perturbations), given an artificial intelligence model and an input sample $x$, different perturbations are added to the input sample $x$. For $S \subseteq N$, $I^{AND}(S|v_{and}, x + \varepsilon_m)$ is defined as the "AND interaction effect" corresponding to the combination $S$ among input units when the $m$-th perturbation $\varepsilon_m$ is added to the input sample $x$, such that $I^{AND}(S|v_{and}, x + \varepsilon_m)$ is triggered only when all input variables in $S$ are not masked, and is accumulated into the output corresponding to the AND interaction of the black-box model for the $m$-th perturbation. Specifically, $I^{AND}(S|v_{and}, x + \varepsilon_m)$ can be computed by the following formula:

$$I^{AND}(S|v_{and}, x + \epsilon_m) = \sum_{L \subseteq S}(-1)^{|S|-|L|}v_{and}[(x + \epsilon_m)_L]$$

All documents cited in the present application are considered to be incorporated in their entirety into the disclosure of the present application, so that they may serve as a basis for amendment when necessary. In addition, it should be understood that after reading the above disclosure of the present application, those skilled in the art can make various changes or modifications to the present application, and these equivalent forms also fall within the scope of protection claimed by the present application.

In the task of extracting common interactions among different models (i.e., in the process of interpreting common interaction effect among multiple black-box artificial intelligence models), the "AND interaction effect" satisfies that, for any given input unit combination $T \subseteq N$ of the sample to be analyzed, the output $v_{m,and}(X_T)$ corresponding to the AND interaction of the $m$-th artificial intelligence model under this input unit combination can be decomposed into the sum of all triggered AND interactions $I^{AND}(S|v_{m,and}, x)$, as shown in the following formula:

$$\forall T \subseteq N, v_{m,and}(x_T) = \sum_{S \subseteq T} I^{AND}\big(S|v_{m,and}, x\big) \left[\bigwedge_{i \in S}(e_T)_i\right] \Leftrightarrow$$

$$v_{m,and}(x_T) = I^{AND}\big(\emptyset|v_{m,and}, x\big) + \sum_{\emptyset \neq S \subseteq T} I^{AND}\big(S|v_{m,and}, x\big)$$

While in the task of extracting common interactions of input samples under different perturbations (i.e., when interpreting common interaction effect of a single black-box artificial intelligence model in input samples under different perturbations), the "AND interaction effect" satisfies that, for any given input unit combination $T \subseteq N$ of the sample to be analyzed, the output $v_{and}[(x + \varepsilon_m)_T]$ of the $m$-th perturbed sample under this input unit combination can be decomposed into the sum of all triggered AND interactions $I^{AND}(S|v_{and}, x + \varepsilon_m)$, as shown in the following formula:

$$\forall T \subseteq N, v_{and}[(x + \epsilon_m)_T] = \sum_{S \subseteq T} I^{AND}(S|v_{and}, x + \epsilon_m) \left[\bigwedge_{i \in S}(e_T)_i\right] \Leftrightarrow$$

$$v_{and}[(x + \epsilon_m)_T] = I^{AND}(\emptyset|v_{and}, x + \epsilon_m) + \sum_{\emptyset \neq S \subseteq T} I^{AND}(S|v_{and}, x + \epsilon_m)$$

Wherein, $e_T$ denotes whether the input variables are masked. When $i \in T$, $(e_T)_i = 1$, indicating that input variable $i$ is not masked (also referred to as being triggered); otherwise, $(e_T)_i = 0$, indicating that input variable $i$ is masked; $\Lambda_{i \in S}(e_T)_i$ indicates whether all units in the input unit combination $S$ are not masked, which is the result of performing an "AND" operation on the elements following the $\Lambda$ symbol, i.e., $\Lambda_{i \in S}(e_T)_i = \Pi_{i \in S}(e_T)_i$.

Further, in the task of extracting common interactions among different models (i.e., in the process of interpreting common interaction effect among multiple black-box artificial intelligence models), the computation formula for the AND interaction of the above $m$-th artificial intelligence model can be equivalently expressed in the following form. Assuming

$$\mathbf{V_{m,and}} = [v_{m,and}(x_{S_1}), v_{m,and}(x_{S_2}), \cdots, v_{m,and}(x_{S_{,n}})] \in \mathbb{R}^{2^n} \quad \text{and}$$

$$\mathbf{I}_m^{AND} = [I^{AND}\big(S_1|v_{m,and}, x\big), I^{AND}\big(S_2|v_{m,and}, x\big), \cdots, I^{AND}\big(S_{2^n}|v_{m,and}, x\big)] \in \mathbb{R}^{2^n} \quad \text{enumerate the}$$

interactions on all input unit combinations, then there exists $A \in \{0, 1, -1\}^{2n \times 2n}$ such that $\mathbf{I}_m^{AND} = A\mathbf{V_{m,and}}$.

While in the task of extracting common interactions of input samples under different perturbations (i.e., when interpreting common interaction effect of a single black-box artificial intelligence model in input samples under different perturbations), the computation formula for the AND interaction of the above $m$-th perturbed sample can be equivalently expressed in the following form. Assuming $\boldsymbol{v_{m,and}} = [v_{and}[(x +$

$$\epsilon_m)_{S_1}], v_{and}[(x + \epsilon_m)_{S_2}], \cdots, v_{and}[(x + \epsilon_m)_{S_{,n}}]] \in \mathbb{R}^{2^n}, \mathbf{I}_m^{\mathbf{AND}} = [I^{AND}(S_1|v_{and}, x +$$

$$\epsilon_m), I^{AND}(S_2|v_{and}, x + \epsilon_m), \cdots, , I^{AND}(S_{2^n}|v_{and}, x + \epsilon_m)] \in \mathbb{R}^{2^n} \quad \text{enumerate the interactions on all input}$$

unit combinations, then there exists $A \in \{0, 1, -1\}^{2n \times 2n}$ such that $\mathbf{I}_m^{AND} = A\mathbf{V_{m,and}}$.

In the above sub-step (3c), the "OR interaction effect" is computed to evaluate the contribution of the OR relationship among any input unit combinations of the sample to be analyzed to the output $v_{m,or}(x)$ of the OR interaction of each black-box model. The "OR interaction effect" represents the additional effect produced on the output corresponding to the OR interaction of a black-box model when at least one unit in the combination is triggered (i.e., not masked). It should be understood that in a black-box model, input units often do not contribute to the model's output individually, but rather interact with each other to influence the model's output.

Therefore, in the task of extracting common interactions among different models (i.e., in the process of interpreting common interaction effect among multiple black-box artificial intelligence models), given $M$ artificial intelligence models and an input sample $x$, for $S \subseteq N$, $I^{OR}(S|v_{m,or}, x)$ is defined as the "OR interaction effect" corresponding to the combination S among input units of the $m$-th artificial intelligence model, such that $I^{OR}(S|v_{m,or}, x)$ is triggered only when at least one of all input variables in S is not masked, and is accumulated into the output $v_{m,or}(x)$ of the OR interaction of the m-th black-box model. Specifically, $I^{OR}(S|v_{m,or}, x)$ can be computed by the following formula:

$$I^{OR}(S|v_{m,or},x) = \begin{cases} v_{m,or}(x_\emptyset), & S = \emptyset \\ -\sum_{L \subseteq S}(-1)^{|S|-|L|}v_{m,or}(x_{N \setminus L}), & S \neq \emptyset \end{cases}$$

While in the task of extracting common interactions of input samples under different perturbations (i.e., when interpreting common interaction effect of a single black-box artificial intelligence model in input samples under different perturbations), given an artificial intelligence model and an input sample $x$, different perturbations are added to the input sample $x$. For $S \subseteq N$, $I^{OR}(S|v_{or}, x + \varepsilon_m)$ is defined as the "OR interaction effect" corresponding to the combination S among input units when the $m$-th perturbation $\varepsilon_m$ is added to the input sample $x$, such that $I^{OR}(S|v_{or}, x + \varepsilon_m)$ is triggered only when at least one of all input variables in S is not masked, and is accumulated into the output corresponding to the OR interaction of the black-box model for the $m$-th perturbation. Specifically, $I^{OR}(S|v_{or}, x + \varepsilon_m)$ can be computed by the following formula:

$$I^{OR}(S|v_{or}, x + \epsilon_m) = \begin{cases} v_{or}[(x + \epsilon_m)_\emptyset], & S = \emptyset \\ -\sum_{L \subseteq S}(-1)^{|S|-|L|}v_{or}[(x + \epsilon_m)_{N \setminus L}], & S \neq \emptyset \end{cases}$$

In the task of extracting common interactions among different models (i.e., in the process of interpreting common interaction effect among multiple black-box artificial intelligence models), the "OR interaction effect" satisfies that, for any given input unit combination $T \subseteq N$ of the sample to be analyzed, the output $v_{m,or}(x_T)$ of the OR interaction of the m-th artificial intelligence model under this input unit combination can be decomposed into the sum of all triggered OR interactions $I^{OR}(S|v_m, x)$, as shown in the following formula:

$$\forall T \subseteq N, v_{m,or}(x_T) = \sum_{S \subseteq N} I^{OR}(S|v_{m,or}, x)\left[\bigvee_{i \in S}(e_T)_i\right] \Leftrightarrow$$

$$v_{m,or}(x_T) = I^{OR}(\emptyset|v_{m,or}, x) + \sum_{S:S \cap T \neq \emptyset} I^{OR}(S|v_{m,or}, x)$$

While in the task of extracting common interactions of input samples under different perturbations (i.e., when interpreting common interaction effect of a single black-box artificial intelligence model in input samples under different perturbations), the "OR interaction effect" satisfies that, for any given input unit combination $T \subseteq N$ of the sample to be analyzed, the output $v_{or}[(x + \varepsilon_m)_T]$ of the $m$-th perturbed sample under this input unit combination can be decomposed into the sum of all triggered OR interactions $I^{OR}(S|v_{or}, x + \varepsilon_m)$, as shown in the following formula:

$$\forall T \subseteq N, v_{or}[(x + \epsilon_m)_T] = \sum_{S \subseteq T} I^{OR}(S|v_{or}, x + \epsilon_m)\left[\bigvee_{i \in S}(e_T)_i\right] \Leftrightarrow$$

$$v_{or}[(x + \epsilon_m)_T] = I^{OR}(\emptyset|v_{or}, x + \epsilon_m) + \sum_{S:S \cap T \neq \emptyset} I^{OR}(S|v_{or}, x + \epsilon_m)$$

Wherein, $e_T$ denotes whether the input variables are not masked. When $i \in T$, $(e_T)_i = 1$, indicating that input variable $i$ is not masked; otherwise, $(e_T)_i = 0$, indicating that input variable $i$ is masked; $\vee_{i \in S}(e_T)_i$ indicates whether at least one unit in the input unit combination $S$ is not masked, which is the result of performing an "OR" operation on the elements following the v symbol, i.e., $\vee_{i \in S}(e_T)_i = 1 - \Pi_{i \in S}[1 - (e_T)_i]$.

Further, in the task of extracting common interactions among different models (i.e., in the process of interpreting common interaction effect among multiple black-box artificial intelligence models), the computation formula for the OR interaction of the above $m$-th artificial intelligence model can be equivalently expressed in the following form.

Assuming $\quad v_{m,or} = [v_{m,or}(x_{S_1}), v_{m,or}(x_{S_2}), \cdots, v_{m,or}(x_{S_{2^n}})] \in \mathbb{R}^{2^n}$,

$I_m^{OR} = [I^{OR}(S_1|v_{m,or}, x), I^{OR}(S_2|v_{m,or}, x), \cdots, I^{OR}(S_{2^n}|v_{m,or}, x)] \in \mathbb{R}^{2^n}$ enumerate the interactions on all input unit combinations, then there exists $\mathbf{B} \in \{0, 1, -1\}^{2n \times 2n}$ such that $\mathbf{I}_m^{OR} = B\mathbf{v}_{m,or}$ .

While in the task of extracting common interactions of input samples under different perturbations (i.e., when interpreting common interaction effect of a single black-box artificial intelligence model in input samples under different perturbations), the computation formula for the OR interaction of the above $m$-th perturbed sample can be equivalently expressed in the following form.

Assuming

$$v_{m,or} = [v_{or}[(x + \epsilon_m)_{S_1}], v_{or}[(x + \epsilon_m)_{S_2}], \cdots, v_{or}[(x + \epsilon_m)_{S_{,n}}]] \in \mathbb{R}^{2^n},$$

$$\mathbf{I}_m^{OR} = [I^{OR}(S_1|v_{or}, x + \epsilon_m), I^{OR}(S_2|v_{or}, x + \epsilon_m), \cdots, I^{OR}(S_{2^n}|v_{or}, x + \epsilon_m)] \in \mathbb{R}^{2^n} \quad \text{enumerate the}$$

interactions on all input unit combinations, then there exists $\mathbf{B} \in \{0, 1, -1\}^{2n \times 2n}$ such that $\mathbf{I}_m^{OR} = B\mathbf{v}_{m,or}$ .

In a preferred embodiment, the step (4) further comprises the following sub-steps:

(4a) Based on the "AND interaction effect" and "OR interaction effect" in step (3), interpreting each set of black-box model outputs as a combination of "AND interaction effect" and "OR interaction effect" on the input unit combinations of the sample to be analyzed.

(4b) Based on the combination of the "AND interaction effect" and "OR interaction effect" of each model in sub-step (4a), further extracting common interactions of multiple artificial intelligence models, or extracting common interactions of the same model on input samples under different perturbations, through jointly optimizing the combination of the "AND interaction effect" and "OR interaction effect" of multiple models.

In sub-step (4a), in the task of extracting common interactions among different models (i.e., in the process of interpreting common interaction effect among multiple black-box artificial intelligence models), based on the "AND interaction effect" and "OR interaction effect" in step (3), the output $v_m(X_T)$ of the $m$-th artificial intelligence model under any input unit combination $T$ on the sample to be analyzed is interpreted as a combination of "AND interaction effect" and "OR interaction effect". Optionally, based on the baseline value $b^m$ of the $m$-th artificial intelligence model in step (3), the output $v_m(x_T)$ of the $m$-th artificial intelligence model can be interpreted as a combination of "AND interaction effect" and "OR interaction effect". In general, the output $v_m(x_T)$ of the $m$-th artificial intelligence model under any input unit combination on the sample to be analyzed can be interpreted as the following formula:

$$\forall T \subseteq N, v_m(x_T) = v_{m,and}(x_T) + v_{m,or}(x_T)$$
$$= v_m(x_\emptyset) + \sum_{S \subseteq T, S \neq \emptyset} \hat{I}^{AND}(S|v_{m,and}, x) + \sum_{S \cap T \neq \emptyset} \hat{I}^{OR}(S|v_{m,or}, x)$$

Therefore, based on the above interpretation of the black-box model, the output $v_m(x_N)$ of the m-th artificial intelligence model on the sample to be analyzed can be decomposed as $v_m(x_N) = v_m(x_\emptyset) + \Sigma_{S \subseteq N, S = \emptyset} \hat{I}^{AND}(S|v_{m,and}, x) + \Sigma_{S \subseteq N, S = \emptyset} \hat{I}^{OR}(S|v_{m,or}, x)$. Wherein, the output $v_m(x_N)$ of the $m$-th artificial intelligence model is interpreted as the sum of a set of "AND interaction effect", comprising $2^n$ "AND interaction effect" values $\hat{I}^{AND}(S|v_{m,and}, x)$, $S \subseteq N$ among input unit combinations; and the sum of a set of "OR interaction effect", comprising $2^n$ "OR interaction effect" values $\hat{I}^{OR}(S|v_{m,or}, x)$, $S \subseteq N$ among input unit combinations.

While in the task of extracting common interactions of input samples under different perturbations (i.e., when interpreting common interaction effect of a single black-box artificial intelligence model in input samples under different perturbations), based on the "AND interaction effect" and "OR interaction effect" in step (3), the output $v[(x + \varepsilon_m)_T]$ of an artificial intelligence model under any input unit combination $T$ on the $m$-th perturbed sample is interpreted as a combination of "AND interaction effect" and "OR interaction effect". Optionally, based on the baseline value $b^m$ corresponding to the $m$-th perturbed sample in step (3), the model output $v[(x + \varepsilon_m)_T]$ corresponding to the $m$-th perturbed sample can be interpreted as a combination of "AND interaction effect" and "OR interaction effect". In general, the output $v[(x + \varepsilon_m)_T]$ of an artificial intelligence model under any input unit combination on the $m$-th perturbed sample can be interpreted as the following formula:

$$\forall T \subseteq N, v[(x + \epsilon_m)_T] = v_{and}[(x + \epsilon_m)_T] + v_{or}[(x + \epsilon_m)_T]$$
$$= v[(x + \epsilon_m)_\emptyset] + \sum_{S \subseteq T, S \neq \emptyset} \hat{I}^{AND}(S|v_{and}, x + \epsilon_m)$$
$$+ \sum_{S \cap T \neq \emptyset} \hat{I}^{OR}(S|v_{or}, x + \epsilon_m)$$

Therefore, based on the above interpretation of the black-box model, the output $v[(x + \varepsilon_m)_N]$ of an artificial intelligence model on the m-th perturbed sample can be decomposed as $v[(x + \varepsilon_m)_N] = v[(x + \varepsilon_m)_{\varnothing}] + \Sigma_{S \subseteq N, S \neq \varnothing} \hat{I}^{AND}(S|v_{and}, x + \varepsilon_m) + \Sigma_{S \subseteq N, S \neq \varnothing} \hat{I}^{OR}(S|v_{or}, x + \varepsilon_m)$. Wherein, the model output $v[(x + \varepsilon_m)_T]$ corresponding to the m-th perturbed sample is interpreted as the sum of a set of "AND interaction effect", comprising $2^n$ "AND interaction effect" values $\hat{I}^{AND}(S|v_{and}, x + \varepsilon_m)$, $S \subseteq N$ among input unit combinations; and the sum of a set of "OR interaction effect", comprising $2^n$ "OR interaction effect" values $\hat{I}^{OR}(S|v_{or}, x + \varepsilon_m)$, $S \subseteq N$ among input unit combinations.

In sub-step (4b), based on the combination of the "AND interaction effect" and "OR interaction effect" of each model obtained in sub-step (4a), common interactions of multiple artificial intelligence models are further extracted, or common interactions of the same model on input samples under different perturbations are extracted.

To achieve the extraction of common interactions from multiple artificial intelligence models, the present invention will sequentially execute the following steps:

(1) Given $M$ artificial intelligence models $v_1, v_2, \ldots v_m$ and an input sample $x$, the AND interactions $\hat{I}^{AND}(S|v_{m,and}, x)$ and OR interactions $\hat{I}^{OR}(S|v_{m,or}, x)$, $m \in \{1,2, \ldots , M\}$ of each artificial intelligence model are respectively computed.

(2) For each set $S_i \subseteq N$, the AND interactions of the $M$ artificial intelligence models are combined as

$$\mathbf{I}^{AND}(S_i) = \left[ \hat{I}^{AND}\left(S_i|v_{1,and}, x\right), \hat{I}^{AND}\left(S_i|v_{2,and}, x\right), \cdots \hat{I}^{AND}\left(S_i|v_{M,and}, x\right) \right] \in \mathbb{R}^M ,$$ and the OR interactions of the M artificial intelligence models are combined as

$$\mathbf{I}^{OR}(S_i) = \left[ \hat{I}^{OR}\left(S_i|v_{1,or}, x\right), \hat{I}^{OR}\left(S_i|v_{2,or}, x\right), \cdots \tilde{I}^{OR}\left(S_i|v_{M,or}, x\right) \right] \in \mathbb{R}^M .$$

(3) For each set $S_i \subseteq N$, the absolute values of the AND interactions $|\hat{I}^{AND}(S_i|v_{m,and}, x)|$, $m \in \{1,2, \ldots , M\}$ and the absolute values of the OR interactions $|\hat{I}^{OR}(S_i|v_{m,or}, x)|$, $m \in \{1,2, \ldots , M\}$ of the $M$ artificial intelligence models are respectively sorted in descending order.

(4) For each set $S_i \subseteq N$, the top $K$ AND interactions and OR interactions with the largest absolute values extracted by the $M$ artificial intelligence models on the set $S_i$ are respectively identified, denoted as $\Omega_{AND}(S_i)$ and $\Omega_{OR}(S_i)$, and these interactions are penalized with a weight of 1. For example, when K=3, $\Omega_{AND}(S_i)=\{1,2,5\}$ indicates that $\hat{I}^{AND}(S|v_{1,and}, x)$, $\hat{I}^{AND}(S|v_{2,and}, x)$, $\hat{I}^{AND}(S|v_{5,and}, x)$ are the top K=3 AND interactions with the largest absolute values among the AND interactions extracted from the M artificial intelligence models.

(5) For each set $S_i \subseteq N$, the remaining $(M - K)$ AND interactions and OR interactions are penalized with a weight of $r$, where $r \in [0,1)$.

(6) The above process can be expressed as optimizing the following loss function:

$$\min_{\hat{I}^{AND}, \hat{I}^{OR}} Loss = Loss_{salient} + r \cdot Loss_{non-salient}$$

wherein,

Optionally, when optimizing the above loss function, the following technique can be used. $\mathbf{p^m} \in \mathbb{R}^{2^{\tilde{n}}}$ can be defined to represent a partition of the output $\mathbf{v_m}$ of the $m$-th artificial intelligence model into "AND interaction effect" and "OR interaction effect"; and $\mathbf{q}^m \in \mathbb{R}^{2^n}$ can be defined, where $\mathbf{q}^m$ is a vector with small absolute values in each dimension, representing the bias produced by interpreting the output of the m-th model as "AND interaction effect" and "OR interaction effect". Such that

$$\hat{I}_m^{AND} = A v_{m,and} = A \left( \tfrac{1}{2}(\boldsymbol{v_m} + \boldsymbol{q}^m) + \boldsymbol{p}^m \right), \hat{I}_m^{OR} = B v_{m,or} = B \left( \tfrac{1}{2}(\boldsymbol{v_m} + \boldsymbol{q}^m) - \boldsymbol{p}^m \right) .$$ Then the above optimization problem can be converted into the following form:

$$\min_{p^1, q^1, \ldots, p^M, q^M} Loss = Loss_{salient} + r \cdot Loss_{non-salient}$$

s. t. $|\boldsymbol{q}_i^m| < \tau_q^m$ wherein, $\tau_q^m$ is a preset bias threshold for the m-th artificial intelligence model. Preferably,

$\tau_q^m = 0.02 \times |v_m(x_N) - v_m(x_{\varnothing})|$.

Optionally, two groups of vectors can be introduced for $\mathbf{p^m}$, $\mathbf{p^m} = \overline{\mathbf{p}}^{\mathbf{m}} + \hat{\mathbf{p}}^{\mathbf{m}}$, wherein $\overline{\mathbf{p}}^{\mathbf{m}}$ represents the partition of "AND interaction effect" and "OR interaction effect" shared among multiple artificial intelligence models, and $\hat{\mathbf{p}}^{\mathbf{m}}$ represents the partition of "AND interaction effect" and "OR interaction effect" individual to each artificial intelligence model. Optionally, the magnitude of each artificial intelligence model's individual partition vector can be constrained, i.e.,

$\left|\hat{\mathbf{p}}_{\mathbf{i}}^{\mathbf{m}}\right| < \tau_p^m$. Wherein, $\tau_p^m$ is a preset partition threshold for the $m$-th artificial intelligence model. Preferably,

$\tau_p^m = 0.5 \times E_x |v_m(x_N) - v_m(x_\varnothing)|$.

(7) By optimizing the above loss function, common interactions of multiple artificial intelligence models can be extracted.

To achieve the extraction of common interactions from input samples under different perturbations of the same model, the present invention will sequentially execute the following steps:

(1) Given an artificial intelligence model v and an input sample $x$, different perturbations are added to the same input sample $x$ to respectively obtain perturbed samples $x + \varepsilon_1, x + \varepsilon_2, \ldots, x + \varepsilon_M$, and the AND interactions $\hat{I}^{AND}(S|v_{and}, x + \varepsilon_m)$ and OR interactions $\hat{I}^{OR}(S|v_{or}, x + \varepsilon_m)$, $m \in \{1,2, \ldots, M\}$ of each model are computed.

(2) For each set $S_i \subseteq N$, the AND interactions of the $M$ perturbed samples are combined as

$\hat{\mathbf{I}}^{AND}(S_i) = \left[\hat{I}^{AND}(S_i|v_{and}, x + \epsilon_1), \hat{I}^{AND}(S_i|v_{and}, x + \epsilon_2), \cdots \hat{I}^{AND}(S_i|v_{and}, x + \epsilon_M)\right] \in \mathbb{R}^M$,

and the OR interactions of the $M$ perturbed samples are combined as

$\hat{\mathbf{I}}^{OR}(S_i) = \left[\hat{I}^{OR}(S_i|v_{or}, x + \epsilon_1), \hat{I}^{OR}(S_i|v_{or}, x + \epsilon_2), \cdots \hat{I}^{OR}(S_i|v_{or}, x + \epsilon_M)\right] \in \mathbb{R}^M$.

(3) For each set $S_i \subseteq N$, the absolute values of the AND interactions $|\hat{I}^{AND}(S_i|v_{and}, x + \varepsilon_m)|$, $m \in \{1,2, \ldots, M\}$ and the absolute values of the OR interactions $|\hat{I}^{OR}(S_i|v_{or}, x + \varepsilon_m)|$, $m \in \{1,2, \ldots, M\}$ of the $M$ perturbed samples are respectively sorted in descending order.

(4) For each set $S_i \subseteq N$, the top $K$ AND interactions and OR interactions with the largest absolute values extracted from the $M$ perturbed samples on the set $S_i$ are respectively identified, denoted as $\Omega_{AND}(S_i)$ and $\Omega_{OR}(S_i)$, and these interactions are penalized with a weight of 1. For example, when K=3, $\Omega_{AND}(S_i)$={1,2,5} indicates that $\hat{I}^{AND}(S|v_{and}, x + \varepsilon_1)$, $\hat{I}^{AND}(S|v_{and}, x + \varepsilon_2)$, $\hat{I}^{AND}(S|v_{and}, x + \varepsilon_5)$ are the top K=3 AND interactions with the largest absolute values among the M perturbed samples.

(5) For each set $S_i \subseteq N$, the remaining ($M - K$) AND interactions and OR interactions are penalized with a weight of $r$, where $r \in [0,1)$.

(6) The above process can be expressed as optimizing the following loss function:

$$\min_{\hat{I}^{AND}, \hat{I}^{OR}} Loss = Loss_{salient} + r \cdot Loss_{non-salient}$$

wherein, ,

Optionally, when optimizing the above loss function, the following technique can be used. $\mathbf{p}^{\mathbf{m}} \in \mathbb{R}^{2^n}$ can be defined to represent a partition of the model output $v(x + \varepsilon_m)$ of the m-th perturbed sample into "AND interaction effect" and "OR interaction effect"; and $\mathbf{q}^m \in \mathbb{R}^{2^n}$ can be defined, where $\mathbf{q}^m$ is a vector with small absolute values in each dimension, representing the bias produced by interpreting the model output of the $m$-th perturbed sample as "AND interaction effect" and "OR interaction effect". Such that

$\hat{\mathbf{I}}_m^{AND} = A\mathbf{v}_{and} = A\left(\frac{1}{2}(v(\mathbf{x} + \epsilon_{\mathbf{m}}) + \mathbf{q}^{\mathbf{m}}) + \mathbf{p}^m\right)$, $\hat{\mathbf{I}}_m^{OR} = A\mathbf{v}_{or} = B\left(\frac{1}{2}(v(\mathbf{x} + \epsilon_{\mathbf{m}}) + \mathbf{q}^{\mathbf{m}}) - \mathbf{p}^m\right)$

. Then the above optimization problem can be converted into the following form:

$$\min_{p^1, q^1, \ldots, p^M, q^M} Loss = Loss_{salient} + r \cdot Loss_{non-salient}$$

$$\text{s.t.} \quad |q_i^m| < \tau_q^m$$

wherein, $\tau_q^m$ is a preset bias threshold for the model of the m-th perturbed sample. Preferably,

$$\tau_q^m = 0.02 \times |v[(x + \epsilon_m)_N] - v[(x + \epsilon_m)_\varnothing]| \ .$$

Optionally, two groups of vectors can be introduced for $\mathbf{p^m}$, $\mathbf{p^m} = \overline{\mathbf{p}}^m + \hat{\mathbf{p}}^m$, wherein $\overline{\mathbf{p}}^m$ represents the partition of "AND interaction effect" and "OR interaction effect" shared among the models of multiple perturbed samples, and $\hat{\mathbf{p}}^m$ represents the partition of "AND interaction effect" and "OR interaction effect" individual to the model of each perturbed sample. Optionally, the magnitude of each perturbed sample's model individual partition vector can be constrained, i.e.,

$\left|\hat{\mathbf{p}}_\mathbf{i}^{\ \mathbf{m}}\right| < \tau_p^m$ . Wherein, $\tau_p^m$ is a preset partition threshold for the model of the $m$-th perturbed sample. Preferably,

$$\tau_p^m = 0.5 \times E_x |v[(x + \epsilon_m)_N] - v[(x + \epsilon_m)_\varnothing]| \ .$$

(7) By optimizing the above loss function, common interactions of the models of multiple perturbed samples can be extracted.

**Examples**

To make the objectives, technical solutions, and advantages of the present application clearer, the embodiments of the present application will be described in further detail below with reference to the accompanying drawings.

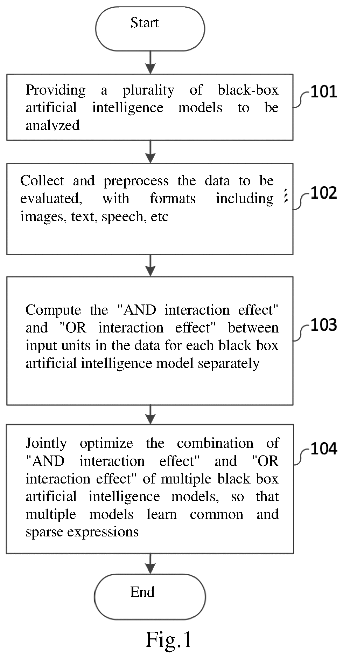

A first embodiment of the present invention relates to a method for interpreting common interaction effect modeled among multiple black-box artificial intelligence models, the flow of which is shown in FIG. 1. The method comprises the following steps:

In step 101: multiple black-box artificial intelligence models are trained based on a certain dataset, as models to be analyzed. Optionally, a model can be a deep neural network. In one example, the multiple black-box artificial intelligence models are selected as the $\text{BERT}_{\text{BASE}}$ and $\text{BERT}_{\text{LARGE}}$ models pre-trained on the SST-2 dataset, which are two different deep neural networks; in another example, the multiple black-box artificial intelligence models are selected as the ResNet-20 model and VGG-16 model pre-trained on the MNIST dataset, which are also two different deep neural networks.

Thereafter, proceeding to step 102, which can be further divided into the following two sub-steps:

(a) Collecting data to be analyzed. Optionally, if the model in step (1) can be used for sentiment classification, the data to be analyzed can be a text.

(b) Preprocessing the data to be analyzed. Optionally, the data to be analyzed can be subjected to processing such as tokenization, encoding into embedding vectors, etc., to adapt it to the input of the aforementioned model.

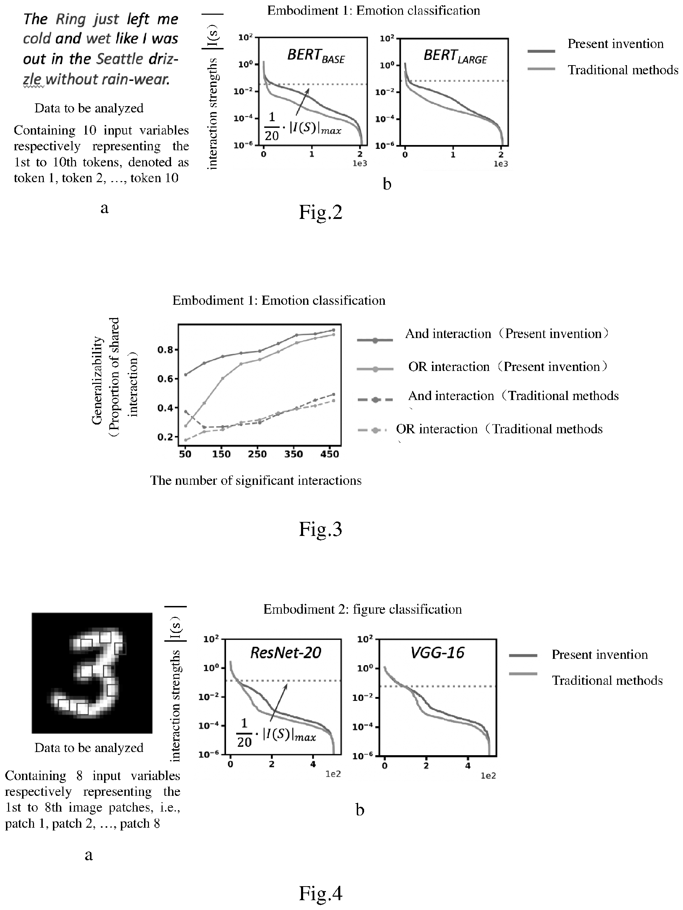

In one example, as shown in FIG. 2 (left), the data is selected as any piece of data from the SST-2 dataset, containing 10 input variables, respectively representing the 1st to 10th tokens, denoted as token 1, token 2, ..., token 10; in another example, as shown in FIG. 4 (left), the model is selected as any piece of data from the MNIST dataset, divided into 8 input variables, respectively representing the 1st to 8th image patches, i.e., patch 1, patch 2, ..., patch 8.

Thereafter, proceeding to step 103, which can be further divided into the following three sub-steps:

(a) Computing the output values of multiple black-box models when any of the above data to be analyzed is masked;

(b) Computing the "AND interaction effect" in the data to be analyzed as modeled by each black-box model;

(c) Computing the "OR interaction effect" in the data to be analyzed as modeled by each black-box model.

In the above sub-step (a), the $M$ black-box artificial intelligence models are denoted as $v_1(x)$, $v_2(x)$, ... $V_M(x)$, and the same data sample $x$ to be analyzed contains $n$ input units, denoted as the set $N = \{1,2, \ldots, n\}$, wherein the number of input units is generally a positive integer greater than or equal to 5. Optionally, each dimension of the input data can be regarded as one input unit, or the input data can be divided into multiple regions, with each region regarded as one input unit.

Any subset $S \subseteq N$ of input units in the input sample is called a combination among input units, and $v_m(x_S)$ ($1 \leq m \leq M$) represents the output of the $m$-th black-box model on a masked sample $x_S$. In particular, if the input sample is input to the $m$-th black-box model without masking, the obtained output is denoted as $v_m(x_N)$; if all input units in the input sample are completely masked and then input to the m-th model, the obtained output is denoted as $v_m(x_\varnothing)$.

When computing the output $v_m(x_S)$ of the $m$-th black-box model on a certain input unit combination $S$, the input values of the sample to be analyzed need to be maintained on the input units contained in $S$, while all input units in the

complement $N \setminus S$ of $S$ are replaced with baseline values. In particular, assuming the baseline value is $b$, the individual input units of the masked sample $x_S$ to be analyzed are defined by the following formula:

$$(x_S)_i = \begin{cases} x_i & \text{if the } i\text{-th input unit of the input is contained in the input unit combination } S \\ b_i & \text{if the } i\text{-th input unit of the input is not contained in the input unit combination } S \end{cases}$$

Thus, $v_m(x_S)$ can be computed as the output value obtained by inputting the sample $x_S$ to be analyzed into the $m$-th model. Optionally, the baseline value can be set to the mean of the sample set, a random value, a zero value, etc., or can be obtained through learning. Wherein, the baseline value of the $m$-th model is denoted as $b^m$. Further, the output $v_m(x_S)$ of the $m$-th model computed based on the baseline value $b^m$ can be specifically denoted as $v_m(x_S|b^m)$. It should be understood that, where no ambiguity arises, $v_m(x_S|b^m)$ can be abbreviated as $v_m(x_S)$.

The "AND interaction effect" and "OR interaction effect" are used to interpret the output of the model. Given the output $v_m$ of the $m$-th black-box model and an input sample $x$, when computing the output $v_m(x_S)$ on a certain input unit combination $S$, the model output $v_m(x_S)$ is decomposed into two terms, i.e., $v_m(x_S) = v_{m,and}(X_S) + v_{m,or}(x_S)$. In this way, $v_{m,and}(x_S)$ can be interpreted using AND interactions, and $v_{m,or}(x_S)$ can be interpreted using OR interactions.

In the above sub-step (b), the "AND interaction effect" is computed to evaluate the contribution of the AND interaction among any input unit combinations of the sample to be analyzed to the output $v_{m,and}(x)$ corresponding to the AND interaction of each model. The "AND interaction effect" represents the additional effect produced on the output corresponding to the AND interaction of a black-box model when the units in the combination are simultaneously triggered (i.e., not masked). It should be understood that in a black-box model, input units often do not contribute to the model's output individually, but rather interact with each other to influence the model's output.

Therefore, in the task of extracting common interactions among different models, given M artificial intelligence models and an input sample $x$, for $S \subseteq N$, $I^{AND}(S|v_{m,and}, x)$ is defined as the "AND interaction effect" corresponding to the combination $S$ among input units of the $m$-th artificial intelligence model, such that $I^{AND}(S|v_{m,and}, x)$ is triggered only when all input variables in $S$ are not masked, and is accumulated into the output $v_{m,and}(x)$ corresponding to the AND interaction of the $m$-th black-box model. Specifically, $I^{AND}(S|v_{m,and}, x)$ can be computed by the following formula:

$$I^{AND}\big(S|v_{m,and}, x\big) = \sum_{L \subseteq S} (-1)^{|S|-|L|} v_{m,and}(x_L)$$

While in the task of extracting common interactions of input samples under different perturbations, given an artificial intelligence model and an input sample $x$, different perturbations are added to the input sample $x$. For $S \subseteq N$, $I^{AND}(S|v_{and}, x + \varepsilon_m)$ is defined as the "AND interaction effect" corresponding to the combination $S$ among input units when the $m$-th perturbation $\varepsilon_m$ is added to the input sample $x$, such that $I^{AND}(S|v_{and}, x + \varepsilon_m)$ is triggered only when all input variables in $S$ are not masked, and is accumulated into the output corresponding to the AND interaction of the black-box model for the $m$-th perturbation. Specifically, $I^{AND}(S|v_{and}, x + \varepsilon_m)$ can be computed by the following formula:

$$I^{AND}(S|v_{and}, x + \epsilon_m) = \sum_{L \subseteq S} (-1)^{|S|-|L|} v_{and}[(x + \epsilon_m)_L]$$

In the task of extracting common interactions among different models, the "AND interaction effect" satisfies that, for any given input unit combination $T \subseteq N$ of the sample to be analyzed, the output $v_{m,and}(x_T)$ corresponding to the AND interaction of the $m$-th artificial intelligence model under this input unit combination can be decomposed into the sum of all triggered AND interactions $I^{AND}(S|v_{m,and}, x)$, as shown in the following formula:

$$\forall T \subseteq N, v_{m,and}(x_T) = \sum_{S \subseteq T} I^{AND}\big(S|v_{m,and}, x\big) \left[ \bigwedge_{i \in S} (e_T)_i \right] \Leftrightarrow$$

$$v_{m,and}(x_T) = I^{AND}\big(\emptyset|v_{m,and}, x\big) + \sum_{\emptyset \neq S \subseteq T} I^{AND}\big(S|v_{m,and}, x\big)$$

While in the task of extracting common interactions of input samples under different perturbations, the "AND interaction effect" satisfies that, for any given input unit combination $T \subseteq N$ of the sample to be analyzed, the output $v_{and}[(x +$

$\varepsilon_m)_T$] of the $m$-th perturbed sample under this input unit combination can be decomposed into the sum of all triggered AND interactions $I^{AND}(S|v_{and}, X + \varepsilon_m)$, as shown in the following formula:

$$\forall T \subseteq N, v_{and}[(x + \epsilon_m)_T] = \sum_{S \subseteq T} I^{AND}(S|v_{and}, x + \epsilon_m)\left[\bigwedge_{i \in S}(e_T)_i\right] \Leftrightarrow$$

$$v_{and}[(x + \epsilon_m)_T] = I^{AND}(\emptyset|v_{and}, x + \epsilon_m) + \sum_{\emptyset \neq S \subseteq T} I^{AND}(S|v_{and}, x + \epsilon_m)$$

Wherein, $e_T$ denotes whether the input variables are masked. When $i \in T$, $(e_T)_i = 1$, indicating that input variable $i$ is not masked (also referred to as being triggered); otherwise, $(e_T)_i = 0$, indicating that input variable $i$ is masked; $\Lambda_{i \in S}(e_T)_i$ indicates whether all units in the input unit combination S are not masked, which is the result of performing an "AND" operation on the elements following the $\Lambda$ symbol, i.e., $\Lambda_{i \in S}(e_T)_i = \Pi_{i \in S}(e_T)_i$.

Further, in the task of extracting common interactions among different models, the computation formula for the AND interaction of the above $m$-th artificial intelligence model can be equivalently expressed in the following form.

Assuming $v_{m,and} = [v_{m,and}(x_{S_1}), v_{m,and}(x_{S_2}), \cdots, v_{m,and}(x_{S,n})] \in \mathbb{R}^{2^n}$ and

$I_m^{AND} = [I^{AND}(S_1|v_{m,and}, x), I^{AND}(S_2|v_{m,and}, x), \cdots, I^{AND}(S_{2^n}|v_{m,and}, x)] \in \mathbb{R}^{2^n}$ enumerate the interactions on all input unit combinations, then there exists $A \in \{0, 1, -1\}^{2^n \times 2^n}$ such that $I_m^{AND} = Av_{m,and}$.

While in the task of extracting common interactions of input samples under different perturbations, the computation formula for the AND interaction of the above $m$-th perturbed sample can be equivalently expressed in the following form. Assuming

$v_{m,and} = [v_{and}[(x + \epsilon_m)_{S_1}], v_{and}[(x + \epsilon_m)_{S_2}], \cdots, v_{and}[(x + \epsilon_m)_{S,n}]] \in \mathbb{R}^{2^n}, I_m^{AND} =$

$[I^{AND}(S_1|v_{and}, x + \epsilon_m), I^{AND}(S_2|v_{and}, x + \epsilon_m), \cdots, I^{AND}(S_{2^n}|v_{and}, x + \epsilon_m)] \in \mathbb{R}^{2^n}$ enumerate the interactions on all input unit combinations, then there exists $A \in \{0, 1, -1\}^{2^n \times 2^n}$ such that $I_m^{AND} = Av_{m,and}$.

In the above sub-step (c), the "OR interaction effect" is computed to evaluate the contribution of the OR relationship among any input unit combinations of the sample to be analyzed to the output $v_{m,or}(x)$ of the OR interaction of each black-box model. The "OR interaction effect" represents the additional effect produced on the output of the OR interaction of a black-box model when at least one unit in the combination is triggered (i.e., not masked). It should be understood that in a black-box model, input units often do not contribute to the model's output individually, but rather interact with each other to influence the model's output.

Therefore, in the task of extracting common interactions among different models, given $M$ artificial intelligence models and an input sample $x$, for $S \subseteq N$, $I^{OR}(S|v_{m,or}, x)$ is defined as the "OR interaction effect" corresponding to the combination S among input units of the $m$-th artificial intelligence model, such that $I^{OR}(S|v_{m,or}, x)$ is triggered only when at least one of all input variables in $S$ is not masked, and is accumulated into the output $v_{m,or}(x)$ of the OR interaction of the m-th black-box model. Specifically, $I^{OR}(S|v_{m,or}, x)$ can be computed by the following formula:

$$I^{OR}(S|v_{m,or}, x) = \begin{cases} v_{m,or}(x_\emptyset), & S = \emptyset \\ -\sum_{L \subseteq S}(-1)^{|S|-|L|}v_{m,or}(x_{N \setminus L}), & S \neq \emptyset \end{cases}$$

While in the task of extracting common interactions of input samples under different perturbations, given an artificial intelligence model and an input sample $x$, different perturbations are added to the input sample $x$. For $S \subseteq N$, $I^{OR}(S|v_{or}, x + \varepsilon_m)$ is defined as the "OR interaction effect" corresponding to the combination S among input units when the $m$-th perturbation $\varepsilon_m$ is added to the input sample $x$, such that $I^{OR}(S|v_{or}, x + \varepsilon_m)$ is triggered only when at least one of all input variables in $S$ is not masked, and is accumulated into the output corresponding to the OR interaction of the black-box model for the m-th perturbation. Specifically, $I^{OR}(S|v_{or}, x + \varepsilon_m)$ can be computed by the following formula:

$$I^{OR}(S|v_{or}, x + \epsilon_m) = \begin{cases} v_{or}[(x + \epsilon_m)_\emptyset], & S = \emptyset \\ -\sum_{L \subseteq S} (-1)^{|S|-|L|} v_{or}[(x + \epsilon_m)_{N \setminus L}], & S \neq \emptyset \end{cases}$$

In the task of extracting common interactions among different models, the "OR interaction effect" satisfies that, for any given input unit combination $T \subseteq N$ of the sample to be analyzed, the output $u_{m,or}(X_T)$ of the OR interaction of the m-th artificial intelligence model under this input unit combination can be decomposed into the sum of all triggered OR interactions $I^{OR}(S|v_m, x)$, as shown in the following formula:

$$\forall T \subseteq N, v_{m,or}(x_T) = \sum_{S \subseteq N} I^{OR}(S|v_{m,or}, x)\left[\bigvee_{i \in S}(e_T)_i\right] \Leftrightarrow$$

$$v_{m,or}(x_T) = I^{OR}(\emptyset|v_{m,or}, x) + \sum_{S:S \cap T \neq \emptyset} I^{OR}(S|v_{m,or}, x)$$

While in the task of extracting common interactions of input samples under different perturbations, the "OR interaction effect" satisfies that, for any given input unit combination $T \subseteq N$ of the sample to be analyzed, the output $v_{or}[(x + \epsilon_m)_T]$ of the m-th perturbed sample under this input unit combination can be decomposed into the sum of all triggered OR interactions $I^{OR}(S|v_{or}, x + \epsilon_m)$, as shown in the following formula:

$$\forall T \subseteq N, v_{or}[(x + \epsilon_m)_T] = \sum_{S \subseteq T} I^{OR}(S|v_{or}, x + \epsilon_m)\left[\bigvee_{i \in S}(e_T)_i\right] \Leftrightarrow$$

$$v_{or}[(x + \epsilon_m)_T] = I^{OR}(\emptyset|v_{or}, x + \epsilon_m) + \sum_{S:S \cap T \neq \emptyset} I^{OR}(S|v_{or}, x + \epsilon_m)$$

Wherein, $e_T$ denotes whether the input variables are not masked. When $i \in T$, $(e_T)_i = 1$, indicating that input variable $i$ is not masked; otherwise, $(e_T)_i = 0$, indicating that input variable $i$ is masked; $V_{i \in S}(e_T)_i$ indicates whether at least one unit in the input unit combination $S$ is not masked, which is the result of performing an "OR" operation on the elements following the v symbol, i.e., $V_{i \in S}(e_T)_i = 1 - \Pi_{i \in S}[1 - (e_T)_i]$.

Further, in the task of extracting common interactions among different models, the computation formula for the OR interaction of the above m-th artificial intelligence model can be equivalently expressed in the following form. Assuming

$$v_{m,or} = [v_{m,or}(x_{S_1}), v_{m,or}(x_{S_2}), \cdots, v_{m,or}(x_{S_{2^n}})] \in \mathbb{R}^{2^n},$$

$$I_m^{OR} = [I^{OR}(S_1|v_{m,or}, x), I^{OR}(S_2|v_{m,or}, x), \cdots, I^{OR}(S_{2^n}|v_{m,or}, x)] \in \mathbb{R}^{2^n}$$ enumerate the interactions on all input unit combinations, then there exists $B \in \{0, 1, -1\}^{2^n \times 2^n}$ such that $I_m^{OR} = Bv_{m,or}$ .

While in the task of extracting common interactions of input samples under different perturbations, the computation formula for the OR interaction of the above m-th perturbed sample can be equivalently expressed in the following form. Assuming

$$v_{m,or} = [v_{or}[(x + \epsilon_m)_{S_1}], v_{or}[(x + \epsilon_m)_{S_2}], \cdots, v_{or}[(x + \epsilon_m)_{S_{2^n}}]] \in \mathbb{R}^{2^n}, I_m^{OR} =$$

$$[I^{OR}(S_1|v_{or}, x + \epsilon_m), I^{OR}(S_2|v_{or}, x + \epsilon_m), \cdots, I^{OR}(S_{2^n}|v_{or}, x + \epsilon_m)] \in \mathbb{R}^{2^n}$$ enumerate the interactions on all input unit combinations, then there exists $B \in \{0, 1, -1\}^{2^n \times 2^n}$ such that $I_m^{OR} = Bv_{m,or}$ .

In one example of the present invention, based on the $BERT_{BASE}$ and $BERT_{LARGE}$ models in step 101, the "AND interaction effect" and "OR interaction effect" values of each model are respectively computed using the aforementioned "AND interaction effect" and "OR interaction effect" computation formulas. As shown in FIG. 2 (right), the distribution plots of the absolute values of the "AND interaction effect" and "OR interaction effect" for different input unit combinations, arranged in descending order, obtained by the present invention and conventional methods are respectively shown.

In another example of the present invention, based on the ResNet-20 and VGG-16 models in step 101, the "AND interaction effect" and "OR interaction effect" values of each model are respectively computed using the aforementioned "AND interaction effect" and "OR interaction effect" computation formulas. As shown in FIG. 4 (right), the distribution plot of the absolute values of the "AND interaction effect" and "OR interaction effect" for different input unit combinations, arranged in descending order, is shown.

Thereafter, proceeding to step 104, which can be further divided into the following substeps:

(a) Based on the "AND interaction effect" and "OR interaction effect" in step (3), interpreting each black-box model output as a combination of "AND interaction effect" and "OR interaction effect" among input unit combinations.

(b) Based on the combination of the "AND interaction effect" and "OR interaction effect" of each black-box model in sub-step (a), further jointly optimizing the combination of the "AND interaction effect" and "OR interaction effect" of multiple models, so that the common interactions among multiple models are sparser and more concise. In sub-step (a), in the task of extracting common interactions among different models, based on the "AND interaction effect" and "OR interaction effect" in step (3), the output $v_m(x_T)$ of the m-th black-box model under any input unit combination $T$ is interpreted as a combination of "AND interaction effect" and "OR interaction effect".

$$\forall T \subseteq N, v_m(x_T) = v_{m,and}(x_T) + v_{m,or}(x_T)$$
$$= v_m(x_\emptyset) + \sum_{S \subseteq T, S \neq \emptyset} \hat{I}^{AND}(S|v_{m,and}, x) + \sum_{S \cap T \neq \emptyset} \hat{I}^{OR}(S|v_{m,or}, x)$$

While in the task of extracting common interactions of input samples under different perturbations, based on the "AND interaction effect" and "OR interaction effect" in step (3), the output $v[(x + \epsilon_m)_T]$ of an artificial intelligence model under any input unit combination T on the $m$-th perturbed sample is interpreted as a combination of "AND interaction effect" and "OR interaction effect".

$$\forall T \subseteq N, v[(x + \epsilon_m)_T] = v_{and}[(x + \epsilon_m)_T] + v_{or}[(x + \epsilon_m)_T]$$
$$= v[(x + \epsilon_m)_\emptyset] + \sum_{S \subseteq T, S \neq \emptyset} \hat{I}^{AND}(S|v_{and}, x + \epsilon_m)$$
$$+ \sum_{S \cap T \neq \emptyset} \hat{I}^{OR}(S|v_{or}, x + \epsilon_m)$$

In sub-step (b), based on the combination of the "AND interaction effect" and "OR interaction effect" of each model obtained in sub-step (a), common interactions of multiple artificial intelligence models are further extracted, or common interactions of the same model on input samples under different perturbations are extracted.

To achieve the extraction of common interactions from multiple artificial intelligence models, the present invention will sequentially execute the following steps:

(1) Given $M$ artificial intelligence models $v_1, v_2, ... v_M$ and an input sample $x$, the AND interactions $\hat{I}^{AND}(S|v_{m,and}, x)$ and OR interactions $\hat{I}^{OR}(S| v_{m,or}, x)$, $m \in \{1,2, ..., M\}$ of each artificial intelligence model are respectively computed.

(2) For each set $S_i \subseteq N$, the AND interactions of the $M$ artificial intelligence models are combined as $I^{AND}(S_i) = [\hat{I}^{AND}(S_i|v_{1,and}, x), \hat{I}^{AND}(S_i|v_{2,and}, x), \cdots \hat{I}^{AND}(S_i|v_{M,and}, x)] \in \mathbb{R}^M$ , and the OR interactions of the M artificial intelligence models are combined as $I^{OR}(S_i) = [\hat{I}^{OR}(S_i|v_{1,or}, x), \hat{I}^{OR}(S_i|v_{2,or}, x), \cdots \bar{I}^{OR}(S_i|v_{M,or}, x)] \in \mathbb{R}^M$ .

(3) For each set $S_i \subseteq N$, the absolute values of the AND interactions $|\hat{I}^{AND}(S_i|v_{m,and}, x)|$, $m \in \{1,2, ..., M\}$ and the absolute values of the OR interactions $|\hat{I}^{OR}(S_i|v_{m,or}, x)|$, $m \in \{1,2, ..., M\}$ of the $M$ artificial intelligence models are respectively sorted in descending order.

(4) For each set $S_i \subseteq N$, the top $K$ AND interactions and OR interactions with the largest absolute values extracted by the $M$ artificial intelligence models on the set $S_i$ are respectively identified, denoted as $\Omega_{AND}(S_i)$ and $\Omega_{OR}(S_i)$, and these interactions are penalized with a weight of 1. For example, when K=3, $\Omega_{AND}(S_i)=\{1,2,5\}$ indicates that $\hat{I}^{AND}(S|v_{1,and}, x)$, $\hat{I}^{AND}(S|v_{2,and}, x)$, $\hat{I}^{AND}(S|v_{5,and}, x)$ are the top K=3 AND interactions with the largest absolute values among the AND interactions extracted from the M artificial intelligence models.

(5) For each set $S_i \subseteq N$, the remaining ($M - K$) AND interactions and OR interactions are penalized with a weight of $r$, where $r \in [0,1)$.

(6) The above process can be expressed as optimizing the following loss function:

$$\min_{\hat{I}^{AND}, \hat{I}^{OR}} Loss = \ Loss_{salient} + r \cdot Loss_{non-salient}$$

wherein,

$$Loss_{salient} = \\ \sum_{S \subseteq N}\left[\sum_{m \in \Omega_{AND}(S)}\left|\hat{I}^{AND}\left(S\middle|v_{m,and}, x\right)\right| + \\ \sum_{m \in \Omega_{OR}(S)}\left|\hat{I}^{OR}\left(S\middle|v_{m,or}, x\right)\right|\right], \ Loss_{non-salient} = \\ \sum_{S \subseteq N}\left[\sum_{m \notin \Omega_{AND}(S)}\left|\hat{I}^{AND}\left(S\middle|v_{m,and}, x\right)\right| + \sum_{m \notin \Omega_{OR}(S)}\left|\hat{I}^{OR}\left(S\middle|v_{m,or}, x\right)\right|\right].$$

Optionally, when optimizing the above loss function, the following technique can be used. $p^m \in \mathbb{R}^{2^n}$ can be defined to represent a partition of the output $v_m$ of the m-th artificial intelligence model into "AND interaction effect" and "OR interaction effect"; and $q^m \in \mathbb{R}^{2^n}$ can be defined, where $q^m$ is a vector with small absolute values in each dimension, representing the bias produced by interpreting the output of the m-th model as "AND interaction effect" and "OR interaction effect". Such that

$$\hat{I}_m^{AND} = A v_{m,and} = A\left(\frac{1}{2}(v_m + q^m) + p^m\right), \hat{I}_m^{OR} = B v_{m,or} = B\left(\frac{1}{2}(v_m + q^m) - p^m\right) \ .$$ Then the above optimization problem can be converted into the following form:

$$\min_{p^1, q^1, \dots, p^M, q^M} Loss = \ Loss_{salient} + r \cdot Loss_{non-salient}$$

$$\text{s. t.} \qquad |q_i^m| < \tau_q^m$$

wherein, $\tau_q^m$ is a preset bias threshold for the m-th artificial intelligence model. Preferably, $\tau_q^m = 0.02 \times |v_m(x_N) - v_m(x_\varnothing)|$.

Optionally, two groups of vectors can be introduced for $p^m$, $p^m = \overline{p}^m + \hat{p}^m$, wherein $\overline{p}^m$ represents the partition of "AND interaction effect" and "OR interaction effect" shared among multiple artificial intelligence models, and $\hat{p}^m$ represents the partition of "AND interaction effect" and "OR interaction effect" individual to each artificial intelligence model. Optionally, the magnitude of each artificial intelligence model's individual partition vector can be constrained, i.e., $|\hat{p}_i^m| < \tau_p^m$. Wherein, $\tau_p^m$ is a preset partition threshold for the m-th artificial intelligence model. Preferably, $\tau_p^m = 0.5 \times E_x|v_m(x_N) - v_m(x_\varnothing)|$ .

(7) By optimizing the above loss function, common interactions of multiple artificial intelligence models can be extracted.

To achieve the extraction of common interactions from input samples under different perturbations of the same model, the present invention will sequentially execute the following steps:

(1) Given an artificial intelligence model v and an input sample $x$, different perturbations are added to the same input sample $x$ to respectively obtain perturbed samples $x + \varepsilon_1, x + \varepsilon_2, \dots, x + \varepsilon_M$, and the AND interactions $\hat{I}^{AND}(S|v_{and}, x + \varepsilon_m)$ and OR interactions $\hat{I}^{OR}(S|v_{or}, x + \varepsilon_m)$, $m \in \{1,2, \dots, M\}$ of each model are computed.

(2) For each set $S_i \subseteq N$, the AND interactions of the $M$ perturbed samples are combined as $\hat{I}^{AND}(S_i) = [\hat{I}^{AND}(S_i|v_{and}, x + \varepsilon_1), \hat{I}^{AND}(S_i|v_{and}, x + \epsilon_2), \cdots \hat{I}^{AND}(S_i|v_{and}, x + \epsilon_M)] \in \mathbb{R}^M$, and the OR interactions of the M perturbed samples are combined as

$$\hat{I}^{OR}(S_i) = \left[\hat{I}^{OR}(S_i|v_{or}, x + \epsilon_1), \hat{I}^{OR}(S_i|v_{or}, x + \epsilon_2), \cdots \hat{I}^{OR}(S_i|v_{or}, x + \epsilon_M)\right] \in \mathbb{R}^M \ .$$

(3) For each set $S_i \subseteq N$, the absolute values of the AND interactions $|\hat{I}^{AND}(S_i|v_{and}, x + \varepsilon_m)|, m \in \{1,2, ..., M\}$ and the absolute values of the OR interactions $|\hat{I}^{OR}(S_i | v_{or}, x + \varepsilon_m)|$, $m \in \{1,2, ... , M\}$ of the $M$ perturbed samples are respectively sorted in descending order.

(4) For each set $S_i \subseteq N$, the top $K$ AND interactions and OR interactions with the largest absolute values extracted from the $M$ perturbed samples on the set $S_i$ are respectively identified, denoted as $\Omega_{AND}(S_i)$ and $\Omega_{OR}(S_i)$, and these interactions are penalized with a weight of 1. For example, when K=3, $\Omega_{AND}(S_i)$={1,2,5} indicates that $\hat{I}^{AND}(S|v_{and}, x + \varepsilon_1)$, $\hat{I}^{AND}(S|v_{and}, x + \varepsilon_2)$, $\hat{I}^{AND}(S|v_{and}, x + \varepsilon_5)$ are the top K=3 AND interactions with the largest absolute values among the M perturbed samples.

(5) For each set $S_i \subseteq N$, the remaining ($M$ - $K$) AND interactions and OR interactions are penalized with a weight of $r$, where $r \in [0,1)$.

(6) The above process can be expressed as optimizing the following loss function:

$$\min_{\hat{I}^{AND}, \hat{I}^{OR}} Loss = Loss_{salient} + r \cdot Loss_{non-salient}$$

wherein,

$$Loss_{salient} =$$
$$\sum_{S \subseteq N}\left[\sum_{m \in \Omega_{AND}(S)}\left|\hat{I}^{AND}(S|v_{and}, x + \epsilon_m)\right| + \right.$$
$$\left.\sum_{m \in \Omega_{OR}(S)}\left|\hat{I}^{OR}(S|v_{or}, x + \epsilon_m)\right|\right], \; Loss_{non-salient} =$$
$$\sum_{S \subseteq N}\left[\sum_{m \notin \Omega_{AND}(S)}\left|\hat{I}^{AND}(S|v_{and}, x + \epsilon_m)\right| + \sum_{m \notin \Omega_{OR}(S)}\left|\hat{I}^{OR}(S|v_{or}, x + \epsilon_m)\right|\right].$$

Optionally, when optimizing the above loss function, the following technique can be used. $p^m \in \mathbb{R}^{2^n}$ can be defined to represent a partition of the model output $v(x + \varepsilon_m)$ of the m-th perturbed sample into "AND interaction effect" and "OR interaction effect"; and $q^m \in \mathbb{R}^{2^n}$ can be defined, where $q^m$ is a vector with small absolute values in each dimension, representing the bias produced by interpreting the model output of the m-th perturbed sample as "AND interaction effect" and "OR interaction effect". Such that $\hat{I}_m^{AND} = Av_{and} = A\left(\frac{1}{2}(v(x + \epsilon_m) + q^m) + p^m\right)$, $\hat{I}_m^{OR} = Av_{or} = B\left(\frac{1}{2}(v(x + \epsilon_m) + q^m) - p^m\right)$.

Then the above optimization problem can be converted into the following form:

$$\min_{p^1, q^1, ..., p^M, q^M} Loss = Loss_{salient} + r \cdot Loss_{non-salient}$$

$$\text{s. t.} \quad |q_i^m| < \tau_q^m$$

wherein, $\tau_q^m$ is a preset bias threshold for the model of the $m$-th perturbed sample. Preferably, $\tau_q^m = 0.02 \times |v[(x + \epsilon_m)_N] - v[(x + \epsilon_m)_{\varnothing}]|$.

Optionally, two groups of vectors can be introduced for $p^m$, $p^m = \overline{p}^m + \hat{p}^m$, wherein $\overline{p}^m$ represents the partition of "AND interaction effect" and "OR interaction effect" shared among the models of multiple perturbed samples, and $\hat{p}^m$ represents the partition of "AND interaction effect" and "OR interaction effect" individual to the model of each perturbed sample. Optionally, the magnitude of each perturbed sample's model individual partition vector can be constrained, i.e., $|\hat{p}_i^m| < \tau_p^m$. Wherein, $\tau_p^m$ is a preset partition threshold for the model of the m-th perturbed sample. Preferably, $\tau_p^m = 0.5 \times E_x|v[(x + \epsilon_m)_N] - v[(x + \epsilon_m)_{\varnothing}]|$.

(7) By optimizing the above loss function, common interactions of the models of multiple perturbed samples can be extracted.

In one embodiment of the present invention, the "AND interaction effect" and "OR interaction effect" computed in FIG. 2 (right) are optimized based on the aforementioned method. As shown in FIG. 2 (right), the sparsity of the interactions extracted by the present invention and conventional methods are respectively shown. Compared with the interactions extracted by conventional methods, although the interactions extracted by the present invention have relatively reduced sparsity, the extracted interactions are still sufficiently sparse. As shown in FIG. 3, the degree of sharing of the common interactions extracted by the present invention and conventional methods are respectively shown. Compared with the interactions extracted by conventional methods, the common interactions extracted by the present invention have a higher degree of sharing, and therefore the extracted interactions have stronger generalizability.

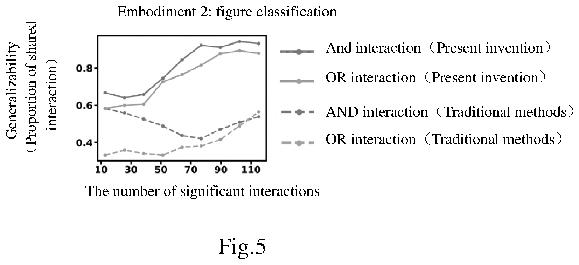

In another embodiment of the present invention, the "AND interaction effect" and "OR interaction effect" computed in FIG. 4 (right) are optimized based on the aforementioned method. As shown in FIG. 4 (right), the sparsity of the interactions extracted by the present invention and conventional methods are respectively shown. Compared with the interactions extracted by conventional methods, although the interactions extracted by the present invention have relatively reduced sparsity, the extracted interactions are still sufficiently sparse. As shown in FIG. 5, the degree of sharing of the common interactions extracted by the present invention and conventional methods are respectively shown. Compared with the interactions extracted by conventional methods, the common interactions extracted by the present invention have a higher degree of sharing, and therefore the extracted interactions have stronger generalizability.

A second embodiment of the present invention relates to a system for interpreting common interaction effect modeled among multiple black-box artificial intelligence models, the structure of which is shown in FIG. 4. The system comprises:

(1) An input module, configured to accept multiple pre-trained black-box artificial intelligence models and a set of data to be analyzed.

(2) A computation module, configured to, based on the models and data in the input module, compute the "AND interaction effect" and "OR interaction effect" among input units of the data modeled by multiple models, jointly optimize the combination of the "AND interaction effect" and "OR interaction effect" of multiple models, and learn common "AND interaction effect" and "OR interaction effect".

(3) An output module, configured to output the combination of the "AND interaction effect" and "OR interaction effect" optimized by the computation module.

It should be noted that those skilled in the art should understand that the implementation functions of the modules shown in the above embodiment of the system for interpreting common interaction effect modeled among multiple black-box artificial intelligence models can be understood with reference to the foregoing relevant description of the method for interpreting common interaction effect modeled among multiple black-box artificial intelligence models. The functions of the modules shown in the above embodiment of the system for interpreting common interaction effect modeled among multiple black-box artificial intelligence models can be implemented by programs (executable instructions) running on a processor, or can be implemented by specific logic circuits. If the above system for interpreting common interaction effect modeled among multiple black-box artificial intelligence models according to the embodiments of the present invention is implemented in the form of software function modules and sold or used as an independent product, it can also be stored in a computer-readable storage medium. Based on this understanding, the essence of the technical solutions of the embodiments of the present invention, or the part that contributes to the prior art, can be embodied in the form of a software product. The computer software product is stored in a storage medium and includes several instructions for causing a computer device (which can be a personal computer, a server, or a network device, etc.) to execute all or part of the method of each embodiment of the present invention. The aforementioned storage medium includes: a USB flash drive, a removable hard disk, a Read-Only Memory (ROM), a magnetic disk, or an optical disk, and other various media that can store program code. Thus, the embodiments of the present invention are not limited to any specific combination of hardware and software.

All documents mentioned in the present invention are considered to be incorporated in their entirety into the disclosure of the present invention, so that they may serve as a basis for amendment when necessary. In addition, it should be understood that the above are merely preferred embodiments of this specification and are not intended to limit the scope of protection of this specification. Any modifications, equivalent substitutions, improvements, etc. made within the spirit and principles of one or more embodiments of this specification shall be included within the scope of protection of one or more embodiments of this specification.

## Claims

1. A method for interpreting common interaction effect among multiple black-box artificial intelligence models, **characterized in that** the method comprises the following steps:

(1) selecting black-box artificial intelligence models;

selecting a plurality of black-box artificial intelligence models to be analyzed, wherein the number of the plurality of black-box artificial intelligence models to be analyzed is $\geq 2$;

(2) selecting an input sample and performing identification;

selecting an input sample for common interaction effect computation, and performing identification on the input sample, thereby decomposing the input sample into n input units, and combining the n input units to obtain $2^n$ combinations of the input units; the input sample is selected from the group consisting of: tabular data, images, text, speech, or combinations thereof;

(3) computing "AND interaction effect" and "OR interaction effect" and performing combination;

inputting the $2^n$ combinations of input units from the step (2) into the plurality of black-box artificial intelligence models respectively to obtain outputs of the plurality of black-box artificial intelligence models; and modeling the interaction effect among the input units modeled by the black-box artificial intelligence models based on the outputs and the $2^n$ combinations of the input units, thereby obtaining the "AND interaction effect" and "OR interaction effect" of each of the black-box artificial intelligence models for each of the combinations of the input units; and interpreting the output of each of the black-box artificial intelligence models on a certain input unit combination as a combination of its "AND interaction effect" and "OR interaction effect" on the input unit combination;

(4) sorting and weighting the "AND interaction effect" and "OR interaction effect"; for each of the combinations of the input units, one "AND interaction effect" and one "OR interaction effect" are measured from each black-box model, thereby obtaining a set of multiple "AND interaction effect" and a multiple "OR interaction effect"; after taking the absolute values and sorting the set of multiple AND interaction effect and the set of multiple OR interaction effect, selecting the top K "AND interaction effect" with the largest absolute values and the top K "OR interaction effect" with the largest absolute values extracted from the multiple black-box models and penalizing them with a weight of 1, and penalizing the remaining interactions with a weight of r, wherein $0 < r < 1$;

(5) optimizing the combination of the weighted "AND interaction effect" and "OR interaction effect" to obtain common interaction effect;

jointly optimizing the combination of the "AND interaction effect" and "OR interaction effect" of the weighted plurality of black-box artificial intelligence models, thereby obtaining the common interaction effect among the plurality of artificial intelligence black-box models;

wherein the order of step (1) and step (2) may be freely exchanged or performed simultaneously.

**2.** The method of claim 1, wherein the outputs of the plurality of black-box artificial intelligence models on the combinations of the input units are defined as follows: if the input units in the set N\S in the input sample x are masked while the input units in the set S are not masked, the obtained output is denoted as $v_m(x_S)$; if the input sample is input to the m-th black-box model without masking, the obtained output is denoted as $v_m(x_N)$; if all input units in the input sample are completely masked and then input to the m-th model, the obtained output is denoted as $v_m(x_\emptyset)$, and the "AND interaction effect" of an input unit combination S on the m-th black-box artificial intelligence model is denoted as $v_{m,and}(x_S)$, and the "OR interaction effect" of this input unit combination on the m-th black-box artificial intelligence model is denoted as $v_{m,or}(x_S)$; specifically, the "AND interaction effect" and "OR interaction effect" are used to interpret the output of the model; and accordingly, the output $v_m(x_S)$ of the black-box artificial intelligence model on the combination S of input units is interpreted as a combination of the "AND interaction effect" and the "OR interaction effect", i.e., $v_m(x_S) = v_{m,and}(x_S) + v_{m,or}(x_S)$.

**3.** The method of claim 2, wherein the "AND interaction effect" represents the additional effect produced by the combination on the output of a black-box model when none of the units in the combination of the input units is masked; preferably, for the m-th artificial intelligence model, for a combination of input units $S \subseteq N$, $I^{AND}(S|v_{m,and}, x)$ is defined as the "AND interaction effect" corresponding to the combination S of input units for the m-th artificial intelligence model, which can be computed by the following formula:

$$I^{AND}\left(S|v_{m,and}, x\right) = \sum_{L \subseteq S}(-1)^{|S|-|L|}v_{m,and}(x_L).$$

**4.** The method of claim 3, wherein the "OR interaction effect" represents the additional effect produced by the combination on the output of a set of black-box models when at least one of the units in the combination of the input units is not masked; preferably, for the m-th artificial intelligence model, for a combination of input units $S \subseteq N$, $I^{OR}(S|v_{m,or}, x)$ is defined as the "OR interaction effect" corresponding to the combination S of input units for the m-th artificial intelligence model, which can be computed by the following formula:

$$I^{OR}(S|v_{m,or}, x) = \begin{cases} v_{m,or}(x_\emptyset), & S = \emptyset \\ -\sum_{L \subseteq S} (-1)^{|S|-|L|} v_{m,or}(x_{N \setminus L}), & S \neq \emptyset \end{cases}$$

5. The method of claim 1, wherein the step (3) further comprises the following step: computing the output value of each black-box model when any of the input units of the input sample are arbitrarily masked.

6. The method of claim 1, wherein the value range of K in the step (4) is $0 < K \leq 5$.

7. The method of claim 3, wherein for the m-th black-box artificial intelligence model, its output $v_m (x_T)$ on any combination S of input units can be interpreted as the following formula:

$$\forall T \subseteq N, v_m(x_T) = v_m(x_\emptyset) + \sum_{S \subseteq T, S \neq \emptyset} \hat{I}^{AND}(S|v_{m,and}, x) + \sum_{S \cap T \neq \emptyset} \hat{I}^{OR}(S|v_{m,or}, x).$$

8. The method of claim 1, wherein the step (5) further comprises the following step: deriving a loss function, wherein the loss function is a characteristic function of the combination of the "AND interaction effect" and the "OR interaction effect", used to represent the degree of optimization of the combination of the "AND interaction effect" and "OR interaction effect"; the loss function is as follows:

$$\min_{p^1, q^1, \ldots, p^M, q^M} Loss = Loss_{salient} + r \cdot Loss_{non-salient} \text{ s.t.} \quad \forall S \subseteq N, |q_S^m| < \tau_q^m$$

wherein:

$$Loss_{salient} = \sum_{S \subseteq N} \left[ \sum_{m \in \Omega_{AND}(S)} |\hat{I}^{AND}(S|v_{m,and}, x)| + \sum_{m \in \Omega_{OR}(S)} |\hat{I}^{OR}(S|v_{m,or}, x)| \right], \ Loss_{non-salient} = \sum_{S \subseteq N} \left[ \sum_{m \notin \Omega_{AND}(S)} |\hat{I}^{AND}(S|v_{m,and}, x)| + \sum_{m \notin \Omega_{OR}(S)} |\hat{I}^{OR}(S|v_{m,or}, x)| \right],$$

for each set $S_i \subseteq N$, M black-box artificial intelligence models will extract a total of M "AND interaction effect" and M "OR interaction effect", and $\Omega_{AND}(S_i)$ and $\Omega_{OR}(S_i)$ respectively represent the top K AND interactions and OR interactions with the largest absolute values among the interaction effect extracted by the M black-box artificial intelligence models; $\tau_q^m$ is a preset bias threshold for the m-th artificial intelligence model, which can be expressed as

$$\tau_q^m = 1 \times |v_m(x_N) - v_m(x_\emptyset)|.$$

9. A method for interpreting common interaction effect of a single black-box artificial intelligence model in input samples under different perturbations, **characterized in that** the method comprises the following steps:

(1)selecting a black-box artificial intelligence model;
selecting a single black-box artificial intelligence model to be analyzed;
(2)selecting an input sample and generating perturbations;
selecting an input sample for common interaction effect computation, and applying multiple random perturbations having the same dimension as the input sample to the input sample, to obtain multiple perturbed samples;
(3)computing "AND interaction effect" and "OR interaction effect" and performing combination;
inputting the multiple perturbed samples from the step (2) into the black-box artificial intelligence model to obtain multiple outputs, and modeling the "AND interaction effect" and "OR interaction effect" of the black-box artificial intelligence model on the multiple perturbed samples based on the outputs and performing combination, and then interpreting the output of each of the perturbed samples on the black-box artificial intelligence model as a combination of its "AND interaction effect" and "OR interaction effect" in the black-box artificial intelligence model;
(4)sorting and weighting the "AND interaction effect" and "OR interaction effect"; for each of the combinations of the input units, one "AND interaction effect" and one "OR interaction effect" are measured from each perturbed sample, thereby obtaining a set of multiple "AND interaction effect" and a multiple "OR interaction effect"; after taking the absolute values and sorting the set of multiple AND interaction effect and the set of multiple OR interaction effect, selecting the top K "AND interaction effect" with the largest absolute values and the top K "OR interaction effect" with the largest absolute values extracted from the multiple perturbed samples and penalizing them with a weight of 1, and penalizing the remaining interactions with a weight of r, wherein $0 < r < 1$;

(5) optimizing the combination of the weighted "AND interaction effect" and "OR interaction effect" to obtain common interaction effect;

jointly optimizing the combination of the "AND interaction effect" and "OR interaction effect" of the weighted multiple perturbed samples, thereby obtaining the common interaction effect among the multiple perturbed samples;

wherein step (1) and step (2) may be freely exchanged or performed simultaneously.

10. A system suitable for the method according to any one of claims 1-9, the system comprising:

an input module, wherein the input module is configured to accept multiple pre-trained black-box artificial intelligence models and a set of data to be analyzed, or a single black-box artificial intelligence model and a set of data to be analyzed with perturbations;

a computation module, wherein the computation module is configured to, based on the models and data in the input module, compute the "AND interaction effect" and "OR interaction effect" among input units of the data to be analyzed as modeled by the multiple sets of models, and jointly optimize the combination of the "AND interaction effect" and "OR interaction effect" of the multiple sets of models to learn common "AND interaction effect" and "OR interaction effect";

an output module, wherein the output module is configured to output the common interactions obtained by the computation module.

Start

Providing a plurality of black-box artificial intelligence models to be analyzed — 101

Collect and preprocess the data to be evaluated, with formats including images, text, speech, etc — 102

Compute the "AND interaction effect" and "OR interaction effect" between input units in the data for each black box artificial intelligence model separately — 103

Jointly optimize the combination of "AND interaction effect" and "OR interaction effect" of multiple black box artificial intelligence models, so that multiple models learn common and sparse expressions — 104

End

Fig.1

*The Ring just left me cold and wet like I was out in the Seattle drizzle without rain-wear.*

Data to be analyzed

Containing 10 input variables respectively representing the 1st to 10th tokens, denoted as token 1, token 2, …, token 10

a

Embodiment 1: Emotion classification

Present invention

Traditional methods

b

Fig.2

Embodiment 1: Emotion classification

And interaction（Present invention）

OR interaction（Present invention）

And interaction（Traditional methods）

OR interaction（Traditional methods）

The number of significant interactions

Fig.3

Data to be analyzed

Containing 8 input variables respectively representing the 1st to 8th image patches, i.e., patch 1, patch 2, …, patch 8

a

Embodiment 2: figure classification

Present invention

Traditional methods

b

Fig.4

Embodiment 2: figure classification

Fig.5

## INTERNATIONAL SEARCH REPORT

| International application No. |
|---|
| **PCT/CN2024/092297** |

### A. CLASSIFICATION OF SUBJECT MATTER

G06N20/00(2019.01)i; G06F18/20(2023.01)i

According to International Patent Classification (IPC) or to both national classification and IPC

### B. FIELDS SEARCHED

Minimum documentation searched (classification system followed by classification symbols)

IPC:G06N; G06F

Documentation searched other than minimum documentation to the extent that such documents are included in the fields searched

Electronic data base consulted during the international search (name of data base and, where practicable, search terms used)

CNABS, CNTXT, CNKI, IEEE, EPTXT, WOTXT, USTXT, VEN: 黑盒, 人工智能, AI, 多个, 多种, 多组, 公共, 交互, 排序, 加强, 惩罚, black box, artificial intelligence, multiple, groups, public, interactive, ordering, boosting, penalty

### C. DOCUMENTS CONSIDERED TO BE RELEVANT

| Category* | Citation of document, with indication, where appropriate, of the relevant passages | Relevant to claim No. |
|---|---|---|
| PX | CN 117764193 A (SHANGHAI JIAO TONG UNIVERSITY) 26 March 2024 (2024-03-26) claims 1-10 | 1-10 |
| A | CN 114462291 A (SHANGHAI JIAO TONG UNIVERSITY) 10 May 2022 (2022-05-10) description, paragraphs 0093-0185, and figures 1-5 | 1-10 |
| A | CN 111914567 A (YUNNAN UNIVERSITY) 10 November 2020 (2020-11-10) entire document | 1-10 |
| A | CN 112766514 A (ALIPAY (HANGZHOU) INFORMATION TECHNOLOGY CO., LTD.) 07 May 2021 (2021-05-07) entire document | 1-10 |
| A | US 2021133630 A1 (UMNAI LIMITED) 06 May 2021 (2021-05-06) entire document | 1-10 |
| A | WO 2022171037 A1 (BEIJING FOURTH PARADIGM TECHNOLOGY CO., LTD.) 18 August 2022 (2022-08-18) entire document | 1-10 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 July 2024** | **08 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/092297**

| Patent document cited in search report | | | Publication date (day/month/year) | Patent family member(s) | | | Publication date (day/month/year) |
|---|---|---|---|---|---|---|---|
| CN | 117764193 | A | 26 March 2024 | None | | | |
| CN | 114462291 | A | 10 May 2022 | None | | | |
| CN | 111914567 | A | 10 November 2020 | None | | | |
| CN | 112766514 | A | 07 May 2021 | None | | | |
| US | 2021133630 | A1 | 06 May 2021 | WO | 2021083837 | A1 | 06 May 2021 |
| | | | | EP | 4052192 | A1 | 07 September 2022 |
| | | | | US | 11049043 | B2 | 29 June 2021 |
| WO | 2022171037 | A1 | 18 August 2022 | CN | 112766415 | A | 07 May 2021 |

Form PCT/ISA/210 (patent family annex) (July 2022)